# EUROPEAN PATENT APPLICATION

(11) **EP 4 412 140 A1**
(43) Date of publication of application: **07.08.2024**
(21) Application number: 22885742.1
(22) Date of filing: 18.10.2022
(51) Int. Cl.: H04L 5/00

(54) **SIGNAL SENDING METHOD AND APPARATUS**

(30) Priority: 29.10.2021 CN 202111273362
(71) Applicant: Huawei Technologies Co., Ltd., Shenzhen, Guangdong 518129 (CN)
(72) Inventor: LUO, Zhihu, Shenzhen, Guangdong 518129 (CN); WU, Yiling, Shenzhen, Guangdong 518129 (CN); JIN, Zhe, Shenzhen, Guangdong 518129 (CN); QU, Weilin, Shenzhen, Guangdong 518129 (CN)
(74) Representative: Pfenning, Meinig & Partner mbB
(86) International application number: PCT/CN2022/125894
(87) International publication number: WO 2023/071864

(57) **Abstract**

Embodiments of this application provide a signal sending method and an apparatus. The method includes: A first device sends a first signal to a second device on N orthogonal frequency division multiplexing OFDM symbols, where the N OFDM symbols include N1 first symbols, N is an integer greater than or equal to 1, and N1 < N. The first device sends a second signal to a third device on at least one of the N1 first symbols. According to the signal sending method and the apparatus provided in this application, a technology similar to radio frequency identification RFID and wake-up radio WUR can be introduced to a communication system, and network resource overheads can be reduced.

## Description

This application claims priority to Chinese Patent Application No. 202111273362.4, filed with the China National Intellectual Property Administration on October 29, 2021 and entitled "SIGNAL SENDING METHOD AND APPARATUS", which is incorporated herein by reference in its entirety.

### TECHNICAL FIELD

Embodiments of this application relate to the communication field, and more specifically, to a signal sending method and an apparatus.

### BACKGROUND

In a radio frequency identification (radio frequency identification, RFID) technology, a reader sends a carrier to a tag, and the tag modulates and backscatters the received carrier to transmit data to the reader. In this process, the tag does not generate a carrier. Therefore, a radio frequency front end of the tag may be reduced to a single transistor switch, to reduce manufacturing costs.

Active devices of the institute of electrical and electronics engineers (institute of electrical and electronics engineers, IEEE) 802.11ba wake-up radio (wake-up radio, WUR) include primary connection radio (primary connection radio, PCR) and companion radio (companion radio, CR). The primary connection radio may also be referred to as a primary receiver, and the companion radio is also referred to as a wake-up receiver (wake-up receiver, WuRx). The wake-up receiver monitors a wake-up frame sent by an access point (access point, AP). If the wake-up receiver receives the wake-up frame, the PCR is triggered to switch from a sleep mode to an active mode. Therefore, the wake-up receiver can be in the sleep mode for a long time when the wake-up receiver does not receive the wake-up frame, so that power consumption can be reduced.

As the 5th generation (5th generation, 5G) mobile communication technology, new radio (new radio, NR), machine-type communication (machine-type communication, MTC), and internet of things (internet of things, IoT) communication are widely used, and a quantity of IoT devices increases, requirements for reducing manufacturing costs and power consumption of the IoT devices are higher. Therefore, how to introduce a technology similar to RFID and WUR to an NR system to reduce manufacturing costs or power consumption of a device is an urgent problem to be resolved currently.

### SUMMARY

Embodiments of this application provide a signal sending method, so that a technology similar to RFID and WUR can be introduced to a communication system, and network resource overheads can be reduced.

According to a first aspect, a signal sending method is provided. The method may be performed by a first device, or may be performed by a component (like a chip or a chip system) configured in a first device. The first device may be a network device, or may be a terminal device. This is not limited in this application. The method includes: The first device sends a first signal to a second device on N orthogonal frequency division multiplexing OFDM symbols, where the N OFDM symbols include N1 first symbols, N is an integer greater than or equal to 1, and N1 < N; and the first device sends a second signal to a third device on at least one of the N1 first symbols.

Based on the foregoing solution, the first device can generate, by using a downlink signal in an existing communication system, the first signal to be sent to the second device, and can use a resource element RE corresponding to a first symbol carrying the first signal to carry the second signal to be sent to the third device (whose capability is different from that of the second device). Therefore, a technology similar to RFID and WUR can be introduced to the existing communication system, and network resource overheads can be reduced.

With reference to the first aspect, in some implementations of the first aspect, the N OFDM symbols further include N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 =N.

Based on the foregoing solution, the first device can configure, on the second symbol, some zero-power signals or signals whose power is lower than that of the first symbol, so that network resource overheads can be further reduced.

With reference to the first aspect, in some implementations of the first aspect, the first symbol is an ON symbol corresponding to on-off keying modulation or multi-carrier on-off keying modulation.

With reference to the first aspect, in some implementations of the first aspect, the second symbol is an OFF symbol corresponding to on-off keying modulation or multi-carrier on-off keying modulation.

With reference to the first aspect, in some implementations of the first aspect, the N1 first symbols have same power.

Based on the foregoing solution, a problem that when N1 ON symbols have different power and power of an ON symbol is low, the ON symbol is mistakenly considered as an OFF symbol by the second device, thereby affecting demodulating performance of the ON OFF symbol by the second device can be avoided.

With reference to the first aspect, in some implementations of the first aspect, the N OFDM symbols include at least four consecutive first symbols.

With reference to the first aspect, in some implementations of the first aspect, the four consecutive first symbols carry a synchronization signal and/or a broadcast signal.

Based on the foregoing solution, the first device may carry SSBs on REs corresponding to four consecutive ON symbols, to reduce network resource overheads.

With reference to the first aspect, in some implementations of the first aspect, a quantity of OFDM symbols occupied by a preamble sequence of the first signal is an integer multiple of a quantity of OFDM symbols in one slot.

Based on the foregoing solution, the first device may carry a PDSCH on an RE corresponding to the ON symbol of the N OFDM symbols, to reduce network resource overheads.

With reference to the first aspect, in some implementations of the first aspect, the second signal includes at least one of the following: downlink control information, a physical downlink shared channel, a reference signal, a synchronization signal, and a broadcast signal.

With reference to the first aspect, in some implementations of the first aspect, when the second signal includes the downlink control information, the downlink control information is downlink control information that is not used to schedule data.

Based on the foregoing solution, impact caused, when data scheduled by using DCI occupies consecutive OFDM symbols, on a boundary that is of an ON symbol or an OFF symbol in the first signal and that is obtained by the second device can be avoided.

With reference to the first aspect, in some implementations of the first aspect, before sending the first signal to the second device on the N OFDM symbols, the first device sends semi-static configuration signaling to the third device, a first resource configured by using the semi-static configuration signaling is activated, and the first resource includes the N OFDM symbols. Before sending the first signal to the second device on the N OFDM symbols, the first device sends deactivation information to the third device, where the deactivation information is used to deactivate the first resource.

Based on the foregoing solution, to avoid that the third device mistakenly considers the first signal as information scheduled by the first resource configured by using the semi-static configuration signaling, and that reception performance of the third device is affected, the first device needs to deactivate the first resource configured by using the semi-static configuration signaling before the first signal is transmitted.

According to a second aspect, a signal sending method is provided. The method may be performed by a second device, or may be performed by a component (like a chip or a chip system) configured in a second device. The second device may be a terminal device. This is not limited in this application. The second device receives a first signal from a first device on N orthogonal frequency division multiplexing OFDM symbols, where the N OFDM symbols include N1 first symbols, at least one of the N1 first symbols carries a second signal sent by the first device to a third device, N is an integer greater than or equal to 1, and N1 < N.

Based on the foregoing solution, the first signal received by the second device may be generated based on a downlink signal in an existing communication system, and a resource element RE corresponding to a first symbol of the first signal may alternatively carry the second signal to be sent to the third device (whose capability is different from that of the second device). Therefore, a technology similar to RFID and WUR can be introduced to the existing communication system, and network resource overheads can be reduced.

With reference to the second aspect, in some implementations of the second aspect, the N OFDM symbols further include N2 second symbols, and at least one OFDM symbol of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 = N.

Based on the foregoing solution, some zero-power signals or signals whose power is lower than that of the first symbol may be configured on the second symbol, so that network resource overheads can be further reduced.

With reference to the second aspect, in some implementations of the second aspect, the first symbol is an ON symbol corresponding to on-off keying modulation or multi-carrier on-off keying modulation.

With reference to the second aspect, in some implementations of the second aspect, the second symbol is an OFF symbol corresponding to on-off keying modulation or multi-carrier on-off keying modulation.

With reference to the second aspect, in some implementations of the second aspect, the N1 first symbols have same power.

Based on the foregoing solution, a problem that when N1 ON symbols have different power and power of an ON symbol is low, the ON symbol is mistakenly considered as an OFF symbol by the second device, thereby affecting demodulating performance of the ON OFF symbol by the second device can be avoided.

With reference to the second aspect, in some implementations of the second aspect, the N OFDM symbols include at least four consecutive first symbols.

With reference to the second aspect, in some implementations of the second aspect, the four consecutive first symbols carry a synchronization signal and/or a broadcast signal. Based on the foregoing solution, the first device may carry SSBs on REs corresponding to the four consecutive ON symbols, to reduce network resource overheads.

With reference to the second aspect, in some implementations of the second aspect, a quantity of OFDM symbols occupied by a preamble sequence of the first signal is an integer multiple of a quantity of OFDM symbols in one slot.

Based on the foregoing solution, the first device may carry a PDSCH on an RE corresponding to the ON symbol of the N OFDM symbols, to reduce network resource overheads.

With reference to the second aspect, in some implementations of the second aspect, the second signal includes at least one of the following: downlink control information, a physical downlink shared channel, a reference signal, a synchronization signal, and a broadcast signal.

With reference to the second aspect, in some implementations of the second aspect, when the second signal includes the downlink control information, the downlink control information is downlink control information that is not used to schedule data.

Based on the foregoing solution, impact caused, when data scheduled by using DCI occupies consecutive OFDM symbols, on a boundary that is of an ON symbol or an OFF symbol in the first signal that is obtained by the second device can be avoided.

According to a third aspect, a signal sending method is provided. The method may be performed by a first device, or may be performed by a component (like a chip or a chip system) configured in a first device. The first device may be a network device, or may be a terminal device. This is not limited in this application. The method includes: The first device sends a first signal to a second device on N orthogonal frequency division multiplexing OFDM symbols, where the N OFDM symbols include N1 first symbols, N is an integer greater than or equal to 1, and N1 < N.

Based on the foregoing solution, a technology similar to RFID and WUR may be introduced to an existing communication system, so that the first device can use a resource element RE corresponding to a first symbol carrying the first signal to carry a second signal (for example, one or more of downlink control information, a physical downlink shared channel, a reference signal, a synchronization signal, and a broadcast signal) that is sent to a third device (whose capability is different from that of the second device), to improve spectral efficiency.

With reference to the third aspect, in some implementations of the third aspect, the N OFDM symbols further include N2 second symbols, and N2 + N1 = N.

Based on the foregoing solution, the first device can configure, on the second symbol, some zero-power signals or signals whose power is lower than that of the first symbol, so that spectral efficiency can be further improved.

With reference to the third aspect, in some implementations of the third aspect, the first symbol is an ON symbol corresponding to on-off keying modulation or multi-carrier on-off keying modulation.

With reference to the third aspect, in some implementations of the third aspect, the second symbol is an OFF symbol corresponding to on-off keying modulation or multi-carrier on-off keying modulation.

With reference to the third aspect, in some implementations of the third aspect, the N1 first symbols have same power.

Based on the foregoing solution, a problem that when N1 ON symbols have different power and power of an ON symbol is low, the ON symbol is mistakenly considered as an OFF symbol by the second device, thereby affecting demodulating performance of the ON OFF symbol by the second device can be avoided.

With reference to the third aspect, in some implementations of the third aspect, the N OFDM symbols include at least four consecutive first symbols.

Based on the foregoing solution, the first device may carry SSBs on REs corresponding to four consecutive ON symbols, to improve spectral efficiency.

With reference to the third aspect, in some implementations of the third aspect, a quantity of OFDM symbols occupied by a preamble sequence of the first signal is an integer multiple of a quantity of OFDM symbols in one slot.

Based on the foregoing solution, the first device may carry a PDSCH on an RE corresponding to the ON symbol of the N OFDM symbols, to reduce network resource overheads.

According to a fourth aspect, a signal sending method is provided. The method may be performed by a second device, or may be performed by a component (like a chip or a chip system) configured in a second device. The second device is a terminal device. This is not limited in this application. The method includes: The second device receives a first signal from a first device on N orthogonal frequency division multiplexing OFDM symbols, where the N OFDM symbols include N1 first symbols, N is an integer greater than or equal to 1, and N1 < N.

Based on the foregoing solution, a technology similar to RFID and WUR may be introduced to an existing communication system, so that a resource element RE corresponding to a first symbol carrying the first signal may carry a second signal (for example, one or more of downlink control information, a physical downlink shared channel, a reference signal, a synchronization signal, and a broadcast signal) that is sent to a third device (whose capability is different from that of the second device), to improve spectral efficiency.

With reference to the fourth aspect, in some implementations of the fourth aspect, the N OFDM symbols further include N2 second symbols, and N2 + N1 = N.

Based on the foregoing solution, some zero-power signals or signals whose power is lower than that of the first symbol may be configured on the second symbol, so that spectral efficiency can be further improved.

With reference to the fourth aspect, in some implementations of the fourth aspect, the first symbol is an ON symbol corresponding to on-off keying modulation or multi-carrier on-off keying modulation.

With reference to the fourth aspect, in some implementations of the fourth aspect, the second symbol is an OFF symbol corresponding to on-off keying modulation or multi-carrier on-off keying modulation.

With reference to the fourth aspect, in some implementations of the fourth aspect, the N1 first symbols have same power.

Based on the foregoing solution, a problem that when N1 ON symbols have different power and power of an ON symbol is low, the ON symbol is mistakenly considered as an OFF symbol by the second device, thereby affecting demodulating performance of the ON OFF symbol by the second device can be avoided.

With reference to the fourth aspect, in some implementations of the fourth aspect, the N OFDM symbols include at least four consecutive first symbols.

Based on the foregoing solution, SSBs may be carried on REs corresponding to four consecutive ON symbols, to improve spectral efficiency.

With reference to the fourth aspect, in some implementations of the fourth aspect, a quantity of OFDM symbols occupied by a preamble sequence of the first signal is an integer multiple of a quantity of OFDM symbols in one slot.

Based on the foregoing solution, a PDSCH may be carried on an RE corresponding to the ON symbol of the foregoing N OFDM symbols, to improve spectral efficiency.

According to a fifth aspect, a signal sending apparatus is provided. The apparatus may be a first device, or may be a component (like a chip or a chip system) configured in a first device. The first device may be a network device, or may be a terminal device. This is not limited in this application. The apparatus includes a transceiver unit, where the transceiver unit is configured to send a first signal to a second device on N orthogonal frequency division multiplexing OFDM symbols, where the N OFDM symbols include N1 first symbols, N is an integer greater than or equal to 1, and N1 < N; and the transceiver unit is further configured to send a second signal to a third device on at least one of the N1 first symbols.

Based on the foregoing solution, the first device can generate, by using a downlink signal in an existing communication system, the first signal to be sent to the second device, and can use a resource element RE corresponding to a first symbol carrying the first signal to carry the second signal to be sent to the third device (whose capability is different from that of the second device). Therefore, a technology similar to RFID and WUR can be introduced to the existing communication system, and network resource overheads can be reduced.

With reference to the fifth aspect, in some implementations of the fifth aspect, the N OFDM symbols further include N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 =N.

With reference to the fifth aspect, in some implementations of the fifth aspect, the N1 first symbols have same power.

With reference to the fifth aspect, in some implementations of the fifth aspect, the first symbol is an ON symbol corresponding to on-off keying modulation or multi-carrier on-off keying modulation.

With reference to the fifth aspect, in some implementations of the fifth aspect, the second symbol is an OFF symbol corresponding to on-off keying modulation or multi-carrier on-off keying modulation.

With reference to the fifth aspect, in some implementations of the fifth aspect, the N OFDM symbols include at least four consecutive first symbols.

With reference to the fifth aspect, in some implementations of the fifth aspect, the four consecutive first symbols carry a synchronization signal and/or a broadcast signal.

With reference to the fifth aspect, in some implementations of the fifth aspect, a quantity of OFDM symbols occupied by a preamble sequence of the first signal is an integer multiple of a quantity of OFDM symbols in one slot.

With reference to the fifth aspect, in some implementations of the fifth aspect, the second signal includes at least one of the following: downlink control information, a physical downlink shared channel, a reference signal, a synchronization signal, and a broadcast signal.

With reference to the fifth aspect, in some implementations of the fifth aspect, when the second signal includes the downlink control information, the downlink control information is downlink control information that is not used to schedule data.

With reference to the fifth aspect, in some implementations of the fifth aspect, before sending the first signal to the second device on the N OFDM symbols, the transceiver unit sends semi-static configuration signaling to the third device, a first resource configured by using the semi-static configuration signaling is activated, and the first resource includes the N OFDM symbols. Before sending the first signal to the second device on the N OFDM symbols, the transceiver unit is further configured to send deactivation information to the third device, where the deactivation information is used to deactivate the first resource.

According to a sixth aspect, a signal sending apparatus is provided. The apparatus may be a second device, or may be a component (like a chip or a chip system) configured in a second device. The second device may be a terminal device. This is not limited in this application. The apparatus includes a transceiver unit, where the transceiver unit is configured to receive a first signal from a first device on N orthogonal frequency division multiplexing OFDM symbols, where the N OFDM symbols include N1 first symbols, at least one of the N1 first symbols carries a second signal sent by the first device to a third device, N is an integer greater than or equal to 1, and N1 < N.

Based on the foregoing solution, the first signal received by the second device may be generated based on a downlink signal in an existing communication system, and a resource element RE corresponding to a first symbol of the first signal may alternatively carry the second signal to be sent to the third device (whose capability is different from that of the second device). Therefore, a technology similar to RFID and WUR can be introduced to the existing communication system, and network resource overheads can be reduced.

With reference to the sixth aspect, in some implementations of the sixth aspect, the N OFDM symbols further include N2 second symbols, and at least one OFDM symbol of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 = N.

With reference to the sixth aspect, in some implementations of the sixth aspect, the N1 first symbols have same power.

With reference to the sixth aspect, in some implementations of the sixth aspect, the first symbol is an ON symbol corresponding to on-off keying modulation or multi-carrier on-off keying modulation.

With reference to the sixth aspect, in some implementations of the sixth aspect, the second symbol is an OFF symbol corresponding to on-off keying modulation or multi-carrier on-off keying modulation.

With reference to the sixth aspect, in some implementations of the sixth aspect, the N OFDM symbols include at least four consecutive first symbols.

With reference to the sixth aspect, in some implementations of the sixth aspect, the four consecutive first symbols carry a synchronization signal and/or a broadcast signal.

With reference to the sixth aspect, in some implementations of the sixth aspect, a quantity of OFDM symbols occupied by a preamble sequence of the first signal is an integer multiple of a quantity of OFDM symbols in one slot.

With reference to the sixth aspect, in some implementations of the sixth aspect, the second signal includes at least one of the following: downlink control information, a physical downlink shared channel, a reference signal, a synchronization signal, and a broadcast signal.

With reference to the sixth aspect, in some implementations of the sixth aspect, when the second signal includes the downlink control information, the downlink control information is downlink control information that is not used to schedule data.

According to a seventh aspect, a signal sending apparatus is provided. The apparatus may be a first device, or may be a component (like a chip or a chip system) configured in a first device. The first device may be a network device, or may be a terminal device. This is not limited in this application. The apparatus includes a transceiver unit, where the transceiver unit is configured to send a first signal to a second device on N orthogonal frequency division multiplexing OFDM symbols, where the N OFDM symbols include N1 first symbols, N is an integer greater than or equal to 1, and N1 < N.

Based on the foregoing solution, a technology similar to RFID and WUR may be introduced to an existing communication system, so that the first device can use a resource element RE corresponding to a first symbol carrying the first signal to carry a second signal (for example, one or more of downlink control information, a physical downlink shared channel, a reference signal, a synchronization signal, and a broadcast signal) that is sent to a third device (whose capability is different from that of the second device), to improve spectral efficiency.

With reference to the seventh aspect, in some implementations of the seventh aspect, the N OFDM symbols further include N2 second symbols, and N2 + N1 = N.

Based on the foregoing solution, the first device can configure, on the second symbol, some zero-power signals or signals whose power is lower than that of the first symbol, so that spectral efficiency can be further improved.

With reference to the seventh aspect, in some implementations of the seventh aspect, the first symbol is an ON symbol corresponding to on-off keying modulation or multi-carrier on-off keying modulation.

With reference to the seventh aspect, in some implementations of the seventh aspect, the second symbol is an OFF symbol corresponding to on-off keying modulation or multi-carrier on-off keying modulation.

With reference to the seventh aspect, in some implementations of the seventh aspect, the N1 first symbols have same power.

With reference to the seventh aspect, in some implementations of the seventh aspect, the N OFDM symbols include at least four consecutive first symbols.

With reference to the seventh aspect, in some implementations of the seventh aspect, a quantity of OFDM symbols occupied by a preamble sequence of the first signal is an integer multiple of a quantity of OFDM symbols in one slot.

According to an eighth aspect, a signal sending apparatus is provided. The apparatus may be a second device, or may be a component (like a chip or a chip system) configured in a second device. The second device may be a terminal device. This is not limited in this application. The apparatus includes a transceiver unit, where the transceiver unit is configured to receive a first signal from a first device on N orthogonal frequency division multiplexing OFDM symbols, where the N OFDM symbols include N1 first symbols, N is an integer greater than or equal to 1, and N1 < N.

Based on the foregoing solution, a technology similar to RFID and WUR may be introduced to an existing communication system, so that a resource element RE corresponding to a first symbol carrying the first signal may carry a second signal (for example, one or more of downlink control information, a physical downlink shared channel, a reference signal, a synchronization signal, and a broadcast signal) that is sent to a third device (whose capability is different from that of the second device), to improve spectral efficiency.

With reference to the eighth aspect, in some implementations of the eighth aspect, the N OFDM symbols further include N2 second symbols, and N2 + N1 = N.

Based on the foregoing solution, some zero-power signals or signals whose power is lower than that of the first symbol may be configured on the second symbol, so that spectral efficiency can be further improved.

With reference to the eighth aspect, in some implementations of the eighth aspect, the first symbol is an ON symbol corresponding to on-off keying modulation or multi-carrier on-off keying modulation.

With reference to the eighth aspect, in some implementations of the eighth aspect, the second symbol is an OFF symbol corresponding to on-off keying modulation or multi-carrier on-off keying modulation.

With reference to the eighth aspect, in some implementations of the eighth aspect, the N1 first symbols have same power.

With reference to the eighth aspect, in some implementations of the eighth aspect, the N OFDM symbols include at least four consecutive first symbols.

With reference to the eighth aspect, in some implementations of the eighth aspect, a quantity of OFDM symbols occupied by a preamble sequence of the first signal is an integer multiple of a quantity of OFDM symbols in one slot.

According to a ninth aspect, a communication apparatus is provided. The apparatus includes a processor. The processor is coupled to a memory, and may be configured to execute instructions in the memory, to implement the method in any one of the first aspect or the third aspect, or the possible implementations of the first aspect or the third aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in a first device. When the apparatus is the chip configured in the first device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a tenth aspect, a communication apparatus is provided. The apparatus includes a processor. The processor is coupled to a memory, and may be configured to execute instructions in the memory, to implement the method in any one of the second aspect or the fourth aspect, or the possible implementations of the second aspect or the fourth aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a chip configured in a second device. When the apparatus is the chip configured in the second device, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a communication apparatus is provided. The apparatus includes a logic circuit, where the logic circuit is configured to be coupled to an input/output interface, and transmit data through the input/output interface, to perform the method in any one of the first aspect to the fourth aspect and any possible implementation of the first aspect to the fourth aspect.

According to a twelfth aspect, a computer-readable storage medium is provided. The computer-readable storage medium stores a computer program (which may alternatively be referred to as code or instructions). When the computer program is run on a computer, the computer is enabled to perform the method according to any one of the first aspect to the fourth aspect and the possible implementations of the first aspect to the fourth aspect.

According to a thirteenth aspect, a computer program product is provided. The computer program product includes a computer program (which may also be referred to as code or instructions). When the computer program is run on a computer, and the computer is enabled to perform the method according to any one of the first aspect to the fourth aspect and the possible implementations of the first aspect to the fourth aspect.

According to a fourteenth aspect, a communication system is provided. The communication system includes the foregoing first device and second device. Optionally, the communication system further includes a third device.

For beneficial effects brought by the fifth aspect to the fourteenth aspect, refer to descriptions of beneficial effects in the first aspect to the fourth aspect. Details are not described herein again.

### BRIEF DESCRIPTION OF DRAWINGS

FIG. 1 is a schematic diagram of a communication system according to an embodiment of this application;
FIG. 2 is a schematic diagram of a passive IoT downlink communication method according to this application;
FIG. 3 is a schematic diagram of a passive IoT uplink communication method according to this application;
FIG. 4 is a process interaction diagram of a signal sending method according to an embodiment of this application;
FIG. 5 is a schematic diagram when a sent second signal is DCI according to an embodiment of this application;
FIG. 6 is a schematic diagram when a sent second signal is an SSB according to an embodiment of this application;
FIG. 7 is a schematic diagram when a sent second signal is a PDSCH according to an embodiment of this application;
FIG. 8 is a schematic diagram of deactivating a resource configured by semi-static configuration signaling according to an embodiment of this application;
FIG. 9 is a process interaction diagram of another signal sending method according to an embodiment of this application;
FIG. 10 is a schematic block diagram of a communication apparatus according to an embodiment of this application;
FIG. 11 is a schematic block diagram of another communication apparatus according to an embodiment of this application;
FIG. 12 is a schematic diagram of a structure of a communication apparatus according to an embodiment of this application;
FIG. 13 is a schematic diagram of a structure of another communication apparatus according to an embodiment of this application; and
FIG. 14 is a schematic diagram of a structure of still another communication apparatus according to an embodiment of this application.

### DESCRIPTION OF EMBODIMENTS

The following describes technical solutions of embodiments in this application with reference to accompanying drawings.

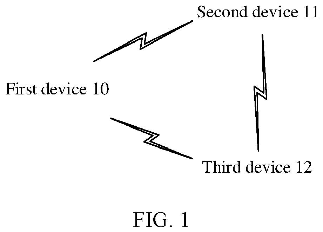

FIG. 1 is a schematic diagram of a communication system according to an embodiment of this application.

As shown in FIG. 1, a first device 10, a second device 11, and a third device 12 form a communication system. It should be understood that in FIG. 1, quantities of the first device 10, the second device 11, and the third device 12 are merely examples. This is not limited in this application. In the communication system, a signal may be transmitted between the first device 10 and the second device 11, a signal may be transmitted between the first device 10 and the third device 12, and a signal may also be transmitted between the second device 11 and the third device 12.

For example, the first device 10 may be a network device, or may be a terminal device. The first device may be a low-capability terminal device, or may be a high-capability terminal device. The second device 11 is a low-capability terminal device, and the third device 12 is a high-capability terminal device.

For example, the second device 11 is a terminal device that supports backscatter communication (for example, supports passive internet of things communication), the third device 12 is a terminal device that does not support backscatter communication (for example, does not support passive internet of things communication), the second device 11 supports a service that requires a low data transmission rate, and the third device 12 supports a service that requires a high data transmission rate. In other words, compared with the third device 12, the second device 11 has lower complexity or a lower capability. For example, the second device 11 may have lower complexity than the third device 12 in terms of a supported bandwidth, power consumption, and a quantity of antennas, for example, the supported bandwidth is narrower, the power consumption is lower, and the quantity of antennas is smaller.

The third device 12 may also be referred to as an NR normal terminal device, or a conventional-capability/normal-capability/high-capability terminal device, or may be referred to as a legacy (legacy) terminal device.

Specifically, a difference between the third device 12 and the second device 11 includes at least one of the following:
1. Bandwidth capabilities are different. A maximum bandwidth supported by the third device may be greater than a maximum bandwidth supported by the second device. For example, the third device may support communication with the network device by using a maximum of 5 MHz to 100 MHz frequency domain resources on one carrier simultaneously, and the second device may support communication with the network device by using a maximum of 180 kHz or several 180 kHz frequency domain resources on one carrier simultaneously.
2. Quantities of transceiver antennas are different. An antenna configuration of the third device may be greater than an antenna configuration of the second device. For example, a minimum antenna configuration supported by the third device may be greater than a maximum antenna configuration supported by the second device. For example, the third device 12 may support 4R2T (four receive antennas and two transmit antennas). The second device may support 1R1T (one receive antenna and one transmit antenna). It may be understood that, when a same data transmission rate is implemented, because a quantity of transceiver antennas of the second device is less than a quantity of transceiver antennas of the third device, a maximum coverage range that can be implemented for data transmission between the second device and the network device is less than a maximum coverage range that can be implemented for data transmission between the third device and the network device.
3. Maximum uplink transmit power is different. Maximum uplink transmit power of the third device is greater than maximum uplink transmit power of the second device.
4. Protocol versions are different. The third device may be a terminal device in an NR release 15 (release-15, Rel-15), an NR release 16 (release-16, Rel-16), or an NR release 17 (release-17, Rel-17). The second device may be considered as a terminal device in NR release 18 (release-18, Rel-18) or a release later than NR Rel-18.
5. Carrier aggregation (carrier aggregation, CA) capabilities are different. For example, the third device may support carrier aggregation, but the second device does not support carrier aggregation. For another example, both the second device and the third device support carrier aggregation, but a maximum quantity of cells for carrier aggregation simultaneously supported by the third device is greater than a maximum quantity of cells for carrier aggregation simultaneously supported by the second device.
6. Frequency division duplex (frequency division duplex, FDD) capabilities are different. For example, the third device supports full-duplex FDD, and the second device supports only half-duplex FDD.
7. Data processing time capabilities are different. For example, a minimum delay between receiving downlink data and sending a feedback for the downlink data by the third device is less than a minimum delay between receiving downlink data and sending a feedback for the downlink data by the second device; and/or a minimum delay between sending uplink data and receiving a feedback for the uplink data by the third device is less than a minimum delay between sending uplink data and receiving a feedback for the uplink data by the second device.
8. Processing capabilities (abilities/capabilities) are different. For example, a baseband processing capability of the third device is higher than a baseband processing capability of the second device. The baseband processing capability may include at least one of the following: a maximum quantity of MIMO layers supported by the terminal device during data transmission, a quantity of HARQ processes supported by the terminal device, and a maximum transmission block size (transmission block size, TBS) supported by the terminal device.
9. Uplink and/or downlink peak transmission rates are different. The peak transmission rate is a maximum data transmission rate that can be reached by the terminal device per unit of time (for example, per second). An uplink peak rate supported by the third device may be higher than an uplink peak rate supported by the second device, and/or a downlink peak rate supported by the third device may be lower than a downlink peak rate supported by the second device. For example, the uplink peak rate of the third device is greater than or equal to 50 Mbps, and the downlink peak rate of the third device is greater than or equal to 150 Mbps; and the uplink peak rate of the second device is less than or equal to 50 Mbps, and the downlink peak rate of the second device is less than or equal to 150 Mbps. For another example, the uplink peak rate or the downlink peak rate of the third device is at a hundred-Mbps level, and the uplink peak rate or the downlink peak rate of the second device is at a Gbps level.
10. Buffer (buffer) sizes are different. A buffer of the third device is greater than a buffer of the second device. The buffer may be understood as a total layer 2 (Layer 2, L2) buffer size, and is defined as a sum of a quantity of bytes buffered by the terminal device for all radio bearers in a radio link control (radio link control, RLC) transmit window, receive window, and reordering window, and a quantity of bytes buffered in a packet data convergence protocol (packet data convergence protocol, PDCP) reordering window. Alternatively, a buffer may be understood as a total quantity of soft channel bits that can be used for hybrid automatic repeat request (hybrid automatic repeat request, HARQ) processing.
11. Receiver architectures are different. A receiver of the third device has a high-frequency crystal oscillator, and may locally generate a carrier for coherent demodulation. A receiver of the second device does not have a high-frequency crystal oscillator, and cannot locally generate a carrier, and can only perform non-coherent demodulation, for example, envelope detection.
12. Uplink communication modes are different. The third device may actively generate a high-frequency carrier. The second device cannot generate a high-frequency carrier in an uplink manner through backscatter communication, and can only receive a downlink continuous carrier, modulate and backscatter the continuous carrier to perform data transmission.
13. Power consumption of the receivers is different. Receive power corresponding to the third device is at a milliwatt (milliwatt, mW) level. Receive power corresponding to the second device is at a milliwatt (milliwatt, mW) level.
14. Modulation schemes are different. A modulation scheme supported by the third device is phase shift keying (phase shift keying, PSK) or quadrature amplitude modulation (quadrature amplitude modulation, QAM). A modulation scheme supported by the second device is amplitude shift keying (amplitude shift keying, ASK), frequency shift keying (frequency shift keying, FSK), or on-off keying (on-off keying, OOK).
15. Coding modes are different. A coding mode supported by the third device is a polar (polar) code, a low-density parity check (low-density parity check, LDPC) code, a tail biting convolutional (tail biting convolutional code, TBCC) code, a turbo (turbo) code, or a reed-muller (reed-muller) code. A coding mode supported by the second device is manchester (manchester) code, miller (miller) code, FM0 (namely, bi-phase space) code, or PIE (pulse interval encoding, pulse width encoding) code.

Alternatively, for example, the second device 11 is a terminal device that supports WUR, and the third device 12 is a terminal device that does not support the WUR. In this case, a difference between the second device 11 and the third device 12 does not include uplink-related descriptions in the foregoing 15 differences, and other differences are the same. Details are not described herein again.

The terminal device in this application may also be referred to as a terminal, an access terminal, user equipment, a subscriber unit, a subscriber station, a mobile station, a mobile console, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are intelligently designed and developed for daily wear by applying wearable technologies. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes a full-function, large-size, and complete or partial functions that can be implemented without depending on a smartphone, for example, a smartwatch or smart glasses, and focuses on only a type of application function and needs to be used with another device such as a smartphone, for example, various smart bands and smart jewelry that perform physical sign monitoring.

The network device in this application may also be referred to as a radio access network (radio access network, RAN) device, and can manage a radio resource. It mainly provides a radio access service, schedules a radio resource to an accessed terminal device, and provides a reliable radio transmission protocol, a data encryption protocol, and the like, and can forward data of the terminal device between the terminal device and a core network.

For example, the network device in embodiments of this application may be any communication device that has a wireless transceiver function and that is configured to communicate with the user equipment, or may be a network device deployed on a satellite, or may be a network device deployed on the ground. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB or home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission point, TP), a transmission reception point (transmission and reception point, TRP), or the like. Alternatively, the device may be a gNB or a transmission point (a TRP or a TP) in a 5G system such as an NR system; may be an antenna panel or a group of antenna panels (including a plurality of antenna panels) of a base station in a 5G system; or may be a network node, such as a baseband unit (BBU) or a distributed unit (distributed unit, DU), that constitutes a gNB or a transmission point.

In some deployments, a gNB may include a central unit (central unit, CU) and a DU. The gNB may further include an active antenna unit (active antenna unit, AAU). The CU performs some functions of the gNB, and the DU performs some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated into information at the PHY layer by using the PHY layer of the DU, or is converted from information at the PHY layer. Therefore, in this architecture, higher layer signaling, for example, RRC layer signaling may also be considered to be sent by the DU, or sent by the DU and the AAU. It may be understood that a network device may be a device including one or more of a CU node, a DU node, and an AAU node. In addition, the CU may be classified into a network device in an access network, or the CU may be classified into a network device in a core network (core network, CN). This is not limited in this application.

The technical solutions in embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, an LTE system, an LTE advanced (LTE advanced, LTE-A) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, or a future evolved communication system, a vehicle-to-everything (vehicle-to-X, V2X) system, a long term evolution-vehicle (long term evolution-vehicle, LTE-V) system, an internet of vehicles system, a machine type communication (machine type communication, MTC) system, an internet of things (Internet of Things, IoT) system, a long term evolution-machine (long term evolution-machine, LTE-M) system, and a machine to machine (machine to machine, M2M) system, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

For better understanding of embodiments of this application, RFID and WUR technologies mentioned in the background of this application are first described.

### 1. RFID technology

The RFID technology is a non-contact automatic recognition technology. It automatically recognizes a target object and obtains related data through a radio frequency signal. The recognition does not require manual intervention.

Generally, an RFID system includes a reader (reader) and a tag (tag). In a passive (batter free) RFID, the reader sends an excitation signal to the tag to charge the tag, that is, the tag receives a microwave signal sent by the reader, and uses the microwave signal to excite an electromagnetic induction coil in the tag to obtain energy, to drive a chip in the tag to work, and sends data to the reader by sending a signal through backscattering. In this manner, the reader may identify an identity (identity, ID) of the tag, and perform operations such as reading and writing on the tag. In this way, data is read and written on the tag. Because a power module is omitted in the passive RFID, a size of a passive RFID product may reach a centimeter level or even be smaller. In addition, the passive RFID product has a simple structure, low costs, a low failure rate, and a long service life.

### 2. WUR technology

In a wireless communication system, most energy of a station device is wasted in channel monitoring. To be specific, when a station receives or sends no message, if the station device continuously monitors a channel, a large amount of energy is consumed. To reduce energy waste and prevent the station device from running slowly caused by long-time dormancy, the station device needs to be capable of running in a low-power consumption and low-delay state. A WUR architecture emerges, and a core idea of the WUR architecture is as follows: In addition to a conventional main transceiver module, namely, main radio (main radio, MR for short), a low-power-consumption wake-up receiver (wake-up receiver, WuRx) part is added to a receive end device, and the conventional transceiver module is 802.11 main radio (main radio, MR). Because the power consumption of the WuRx is several orders of magnitude lower than conventional low power consumption, the WuRx can keep running.

For example, when no data is transmitted between the first device and the second device, MR in the second device enters deep dormancy, a low-power-consumption WuRx starts to work, and the WuRx is configured to monitor a channel. In this case, the MR remains in a deep sleep or off mode until the WuRx wakes the MR up.

For example, when data is transmitted between the first device and the second device, the first device first sends a wake-up packet (wake-up packet, WuP for short) to the WuRx. After an always-on WuRx correctly receiving the WuP sent to the WuRx, the always-on WuRx interrupts a microcontroller of for the MR to switch the MR from the sleep mode to an active mode, to wake up the MR of the second device. Subsequently, the microcontroller of the MR turns on a main radio transceiver to communicate with the first device in a conventional manner. After completing communication with the first device, the MR enters sleep again, and the WuRx starts to listen to whether there is a WuP sent to the wurx, to wake up the MR again. In this technology, the low-power-consumption WuRx is used to replace the main transceiver module to listen to the channel, and this effectively reduces energy waste during monitoring of a device.

In an implementation, an information bit of a wake-up machine is modulated into an on-off keying (on-off keying, OOK) symbol, and the OOK symbol includes an ON symbol and an OFF symbol, where an amplitude of the ON symbol is not 0, and an amplitude of the OFF symbol is 0. A transmit end device uses these OOK symbols to shield a generated narrowband orthogonal frequency division multiplexing (orthogonal frequency division multiplexing, OFDM) waveform (namely, an OOK waveform), to further optimize the OOK waveform. The OOK symbols are carried on 13 subcarriers, and are referred to as multi-carrier (multi-carrier, MC) OOK in the wireless local area network standard IEEE 802.11ba. On a receive end device side, OOK demodulation does not require any channel equalization in frequency domain and time domain. Therefore, the receive end device performs non-coherent detection (for example, envelope detection) by using the wake-up receiver for monitoring. When the non-coherent detection is used, the receive end device does not need to maintain/trace a high-precision oscillation rate. Therefore, phase-locked loop can be avoided, and power consumption on a receive side can be further reduced.

With popularization of the IoT, more IoT devices are deployed in people's lives, for example, devices that are targeted at sensing and data collection in a smart water meter, a shared bicycle, a smart city, environment monitoring, smart home, and forest fire prevention, and the like. In the future, IoT devices are to be ubiquitous, and may be embedded in every clothes, every package, and every key. Almost all offline objects are to be online with enablement of an internet of things technology. However, the IoT devices are widely distributed in a large quantity. Therefore, a process of implementing the internet of everything brings great challenges to the industry, especially a power supply problem. Currently, the IoT is still mainly promoted by an operator. An IoT module needs to use a standard cellular protocol to communicate with a base station. Because the base station needs to cover as large an area as possible, the IoT module needs to be able to perform communication when being far away from the base station. Therefore, the IoT device still needs to consume a current of up to 30 mA during wireless communication. Therefore, the current IoT module still needs to use a battery with a high capacity to work. Consequently, it is difficult to make the IoT module small, and costs of the IoT device are increased.

In addition, some low-power-consumption terminals play an important role in internet of things applications such as medical care, smart home, an industrial sensor, and a wearable device. However, due to a limited size of such terminals, it is difficult to prolong running time of these devices by simply increasing a battery capacity. Therefore, to prolong terminal standby time, power consumption of wireless communication needs to be reduced. A radio transceiver is one of most power-consuming components.

Therefore, to further popularize the IoT and implant the IoT module into a human body or a smaller object, it is no longer possible to match a higher-capacity battery. It is necessary to use a smaller battery, or even completely get rid of battery limitations, or to design a method for reducing power consumption of a radio transceiver to overcome limitations such as costs, a size, and power consumption of the IoT device. Therefore, in June 2021, the 3rd generation partnership project (3rd generation partnership project, 3GPP) organized a seminar on potential research directions for R18, discussed internet of things enhancement technologies, and disclosed that 5G-advanced (5G-advanced) was to introduce passive IoT and WUR technologies in a 5G NR system from R18.

The RFID technology applied in the NR system may be referred to as a passive IoT or a passive (Passive) IoT. The passive IoT is mainly used in the following description. It should be understood that the name is not limited in this application.

The passive IoT is developed based on a large quantity of mature RFID technologies and is similar to an RFID transmission mechanism. In the passive IoT, a passive IoT device may be passive, that is, the passive IoT device is not equipped with or does not rely on a battery or a wired power supply for power supply. However, that the passive IoT device does not have a power module does not mean that the passive IoT device does not need to use power. The passive IoT device may obtain energy from ambient light, heat, and radio frequency, to support internet of things data sensing, wireless transmission, distributed computing, and the like. The passive IoT device may alternatively be a passive energy storage device, or may be a semi-passive device. The passive energy storage device has an energy storage device. The semi-passive device has a battery, but battery power supply only provides auxiliary support for a circuit that requires power supply to maintain data in the tag or a voltage required for working of the chip in the tag. A tag circuit that consumes little power supplies power, and a battery size is small.

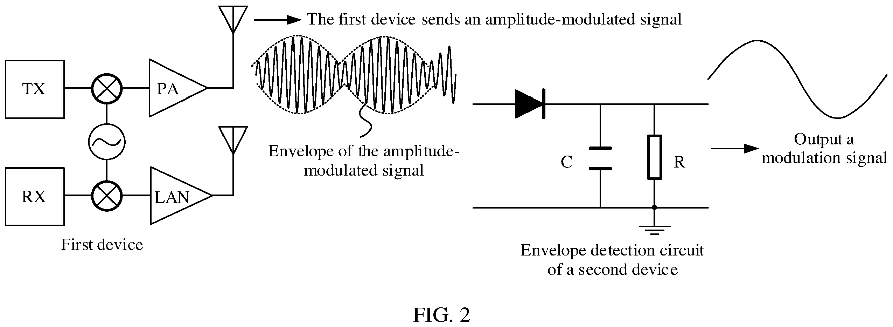

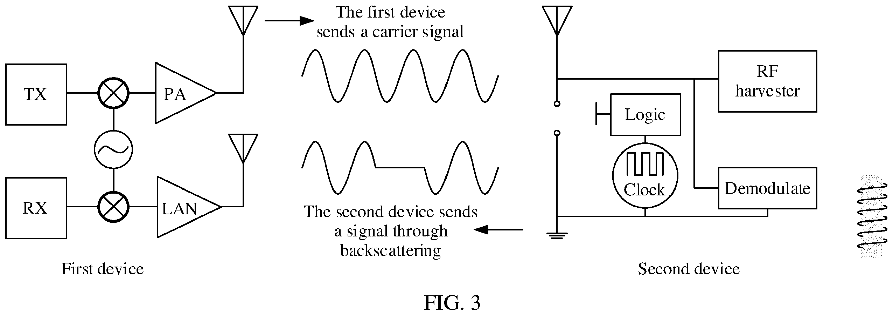

FIG. 2 and FIG. 3 are schematic diagrams of uplink and downlink communication methods in passive IoT communication.

FIG. 2 is a schematic diagram of a passive IoT downlink communication method.

A first device sends an amplitude-modulated signal to a second device over a downlink. The second device receives the amplitude-modulated signal, and may perform envelope detection on the amplitude-modulated signal by using an envelope detector, to obtain a low-frequency signal in the amplitude-modulated signal.

The envelope detection means a process of demodulating a low-frequency signal from an amplitude-modulated signal. In a broad sense, the detection is usually referred to as demodulation, and is an inverse process of modulation, namely, a process of extracting a modulation signal from a modulated signal. For the amplitude-modulated signal, the envelope detection is a process of extracting the modulation signal from an amplitude change of the amplitude-modulated signal. The envelope is an amplitude change curve reflecting a high-frequency signal. When a low-frequency signal is used to perform amplitude modulation on a high-frequency signal, the low-frequency signal becomes an envelope of the high-frequency signal.

Main components of an envelope detector include a diode and an RC oscillation circuit shown in FIG. 2. A common method of the envelope detection is to use a diode to perform one-way filtering and then perform low-pass filtering. A low-pass filter is the RC oscillation circuit shown in FIG. 2. A function of the diode is to prevent a positive envelope and a negative envelope from canceling each other during low-pass filtering, resulting in that a low-frequency signal cannot be detected.

It may be understood that the envelope detection circuit shown in FIG. 2 is a schematic diagram of a structure of a most conventional basic circuit. An evolved structure of the envelope detection circuit is not described herein. A structure of the envelope detection circuit used by the second device is not limited in embodiments of this application.

FIG. 3 is a schematic diagram of a passive IoT uplink communication method.

For example, a second device is a passive IoT device. Herein, that the passive IoT device is a passive device is used as an example. Therefore, the second device cannot provide a power supply, and is unconditionally connected to a wired power supply to provide the passive IoT device with data transmission. Therefore, the second device needs to obtain energy from an external environment, to provide the passive IoT device with other operations such as data transmission and data processing.

Specifically, when the second device receives a carrier signal sent by a first device, the second device may drive a chip to transmit, by using energy obtained by using an electromagnetic field generated in space, information stored in the second device.

In the foregoing implementation method, a relationship between the first device and the second device is an "electromagnetic backscatter coupling" relationship. The "electromagnetic backscatter coupling" means that after a transmitted electromagnetic wave contacts a measured object, information carrying the measured object is backscatterred back by using a spatial propagation rule of the electromagnetic wave. This coupling is suitable for a long-distance radio frequency identification system working in high frequency and microwave.

It may be understood that the uplink communication method in passive IoT communication shown in FIG. 3 is merely an example. The passive IoT device may alternatively drive, by obtaining energy such as ambient light and heat, the chip to transmit information stored in the passive IoT device. Alternatively, the second device may be a passive energy storage device or a semi-passive device.

As described above in the IEEE 802.11ba, during wake-up multi-carrier OOK (multicarrier OOK, MC-OOK) modulation, when an ON symbol and an OFF symbol are generated, a subcarrier corresponding to an OFDM symbol does not carry information. To ensure coverage performance, an information bit may correspond to more coded bits, or bit repetition is introduced. A large quantity of ON symbols and OFF symbols occupy large network resource overheads, and the subcarrier corresponding to the OFDM symbol does not carry the information, resulting in low spectral efficiency. In addition, currently, in the passive IoT communication, there is no specific communication mechanism that can be implemented.

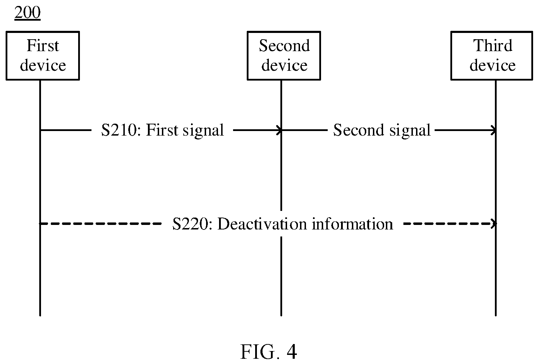

In view of this, as shown in FIG. 4, this application provides a signal sending method 200. A first signal is generated by using an existing signal in an existing NR system or an existing signal in an LTE system, to support passive IoT or WUR communication in the NR system or the LTE system. Certainly, the solution in this application is also applicable to another communication system mentioned above. The method 200 includes the following steps.

Step S210: A first device sends a first signal to a second device, where the first signal is carried on N orthogonal frequency division multiplexing OFDM symbols, the N OFDM symbols include N1 first symbols, N is an integer greater than or equal to 1, and N1 < N. In addition, at least one of the N1 first symbols carries a second signal sent by the first device to a third device. Correspondingly, the second device receives the first signal, and the third device receives the second signal.

The first signal may be a preamble sequence and/or data. A function of the preamble sequence may include at least one of the following: automatic gain control (automatic gain control, AGC), time synchronization, frequency synchronization, data packet detection, boundary detection, and rate indication. The AGC is used to reduce distortion by adjusting strength of a received signal. The time synchronization is used to reduce an error of a non-coherent interval by obtaining correct timing or sampling timing. The boundary detection is used to detect a boundary of the preamble sequence and/or control information. The rate indication is used to indicate different data transmission rates. The preamble sequence is located before the data. A time domain resource used to transmit the preamble sequence and a time domain resource used to transmit the data may be consecutive or inconsecutive. The data herein refers to data corresponding to the preamble sequence.

Each element in a binary sequence corresponding to the first signal corresponds to one of the N OFDM symbols. Alternatively, each element in a coded bit sequence corresponding to the first signal corresponds to one of the N OFDM symbols. For the first signal, one element of the binary sequence may be mapped to one OFDM symbol, or one element of the coded sequence may be mapped to one OFDM symbol. The binary sequence is a sequence including a binary number 0 (or referred to as a bit 0) and/or a binary number 1 (or referred to as a bit 1). The coded bit sequence is a sequence including a binary number 0 (or referred to as a bit 0) and/or a binary number 1 (or referred to as a bit 1). It should be understood that one binary number in the sequence is one element, for example, "0" or " 1" is one element in the sequence. The binary sequence or the coded bit sequence may be represented in a mathematical form as {a₀, a₁, a₂, ..., aₙ₋₁}, where aᵢ is an element of the sequence, aᵢ is a binary number, and i = 0, 1, 2, ..., n-1. The binary sequence or the coded bit sequence includes n elements. It should be noted that when the first signal includes the preamble sequence, a binary sequence corresponding to the preamble sequence does not need to be coded, and when the first signal includes the data, an information bit corresponding to the data needs to be coded.

Each element in a complex number sequence or a non-binary real number sequence corresponding to the second signal is mapped to one resource element (resource element, RE), or an element in a complex number sequence that is obtained after coding and modulation and that corresponds to the second signal is mapped to an RE, and one element is mapped to one RE. One RE corresponds to one OFDM symbol in time domain, and corresponds to one subcarrier in frequency domain. Therefore, one OFDM symbol may correspond to a plurality of REs, that is, a plurality of different elements of the complex number sequence corresponding to the second signal may be mapped to one OFDM symbol. An element of the complex number sequence includes a + b * j, where a and b are real numbers, j is an imaginary unit, and a value of a square of j is -1. Not all elements in the non-binary real number sequence are binary numbers, and each element in the non-binary real number sequence is a real number. For example, a sequence including several 1 and several -1 may be a non-binary real number sequence. For example, the foregoing non-binary real number sequence, or complex number sequence, or a complex number sequence obtained after coding and modulation may be represented in a mathematical form as {b₀, b₁, b₂, ..., bₘ₋₁}, where bᵢ is an element of the sequence. bᵢ is a non-binary real number or complex number, where i = 0, 1, 2, ..., m-1. The sequence includes m elements.

Optionally, a modulation scheme of the first signal is different from a modulation scheme of the second signal. The modulation scheme of the first signal is OOK modulation, ASK modulation, or FSK modulation. The modulation scheme of the second signal is binary phase shift keying (binary phase shift keying, BPSK), quadrature phase shift keying (quadrature phase shift keying, QPSK), 16 quadrature amplitude modulation (quadrature amplitude modulation, QAM), 64 QAM, 256 QAM, 1024 QAM, or the like.

Optionally, a coding mode of the first signal is different from a coding mode of the second signal. The coding mode of the first signal is manchester (manchester) code, miller (miller) code, FM0 (namely, bi-phase space) code, or PIE (pulse interval encoding, pulse width encoding) code. The coding mode of the second signal is a polar (polar) code, a low-density parity check (low-density parity check, LDPC) code, a tail biting convolutional (tail biting convolutional code, TBCC) code, a turbo (turbo) code, or a reed-muller (reed-muller) code.

Optionally, the N OFDM symbols further include N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, or at least one of the N2 second symbols carries a third signal sent by the first device to the third device, where N2 + N1 = N. The downlink signal corresponding to the third device may be any example of the second signal in this embodiment of this application. For details, refer to the description of the second signal. Details are not described herein again.

It should be noted that the third signal meets a feature of the second signal. Details are not described herein again. A difference between the third signal and the second signal lies in that energy of the third signal is lower than energy of the second signal, or power of the third signal is lower than power of the second signal, or energy per resource element (energy per resource element, EPRE) of the third signal is lower than EPRE of the third signal.

It should be understood that the first device notifies, by using configuration information, the third device of a resource that is not used for downlink transmission. The configuration information may be a rate match pattern (RateMatchPattern) in an NR system. For details, refer to an information element RateMatchPattern in section 6.3.2 in 3GPP TS 38.331 V16.6.0. The configuration information may be reserved resource configuration information in an LTE system. For details, refer to an information element ResourceReservationConfig in section 6.3.2 in 3GPP TS 36.331 V16.6.0. The configuration information may be reserved resource configuration information in a narrowband IoT (narrowband IoT, NB-IoT) system. For details, refer to an information element ResourceReservationConfig-NB in section 6.7.3.2 in 3GPP TS 36.331 V16.6.0.

Optionally, the N OFDM symbols used for transmitting the first signal have a same antenna port.

Optionally, cyclic prefixes and/or subcarrier spacings of the N OFDM symbols used for transmitting the first signal are the same.

Optionally, the N OFDM symbols used for transmitting the first signal are located in K time units, all OFDM symbols used for transmitting the first signal in a first time unit have a same antenna port, and the first time unit is one or more of the K time units. For example, K is 2, and the time units are sequentially numbered from 0 to 1. The first time unit is a time unit 0 or a time unit 1, and all OFDM symbols used for transmitting the first signal in the time unit 0 have a same antenna port. In the time unit 1, all OFDM symbols used for transmitting the first signal have a same antenna port. An antenna port of the OFDM symbol used for transmitting the first signal in the time unit 0 may be the same as or different from an antenna port of the OFDM symbol used for transmitting the first signal in the time unit 1. It should be understood that the time unit may be a slot, a frame, a subframe, or the like.

In a possible implementation, a first symbol is an ON symbol corresponding to on-off keying modulation or multi-carrier on-off keying modulation, and a second symbol is an OFF symbol corresponding to on-off keying modulation or multi-carrier on-off keying modulation.

Optionally, a difference between the first symbol and the second symbol includes at least one of the following:
data/signaling is transmitted on the first symbol, and no data/signaling is transmitted on the second symbol;
the first symbol is an OFDM symbol having energy transmission, and the second symbol is an OFDM symbol having no energy transmission; and
on the first symbol, the first device may detect that energy is higher than a threshold, and on the second symbol, the first device does not detect that energy is higher than a threshold.

Energy of the first symbol is higher than energy of the second symbol.

Optionally, the first signal includes a downlink signal of a passive internet of things, or a WUR wake up signal.

Optionally, the N1 first symbols have same power. Alternatively, it may be expressed as that energy of the N1 first symbols is the same. It may also be expressed as that EPRE of the N1 first symbols is the same.

Optionally, a power difference between any two of the N1 first symbols is close, or an absolute value of a power difference between any two of the N1 first symbols is less than a first threshold. The first threshold is less than or equal to an average value of the power of the N1 first symbols. Alternatively, it may be expressed as that an energy difference between any two of the N1 first symbols is close, or an absolute value of an energy difference between any two of the N1 first symbols is less than a second threshold. The second threshold is less than or equal to an average value of the energy of the N1 first symbols. Alternatively, it may be expressed as that an energy difference between any two of the N1 first symbols is close, or an absolute value of an EPRE difference between any two of the N1 first symbols is less than a third threshold. The third threshold is less than or equal to an average value of the EPRE of the N1 first symbols.

It should be understood that, considering distances between different third devices and the first device and/or channel conditions of different third devices and the first device are not necessarily the same, the first device may send second signals to different third devices on N1 ON symbols by using different power. However, if the N1 ON symbols have different power, and power of an ON symbol is low, the ON symbol may be mistakenly considered as an OFF symbol by the second device, and this affects demodulating performance of the ON OFF symbol by the second device. Therefore, to avoid affecting the demodulation performance of the second device, the first device needs to ensure that the N1 first symbols have same power.

Specifically, the first device may receive respective second signals on the N1 ON symbols by scheduling a plurality of third devices with a similar channel condition, so that power on the ON symbols is similar or the same. Alternatively, the first device schedules only one third device to receive the second signal on the N1 ON symbols, so that power on the ON symbols is the same. The foregoing specific implementation is merely an example. It should be understood that the first device may alternatively make the power/energy of the N1 ON symbols close to or the same in another implementation. This is not limited in this application.

For example, the first signal may be modulated through MC-OOK based on a cyclic prefix OFDM (cyclic prefix OFDM, CP-OFDM) waveform. Specifically, the first signal may be carried by using an OFDM symbol whose time length is 2 µs or 4 µs. When the first signal includes a preamble sequence, a binary sequence corresponding to the preamble sequence does not need to be coded. When the first signal includes data, an information bit corresponding to the data needs to be coded. For example, when the first signal includes data, it is assumed that an information bit of the data is "10", and a coded bit is "1001". After MC-OOK or OOK modulation is performed, a coded bit "1" generates an ON symbol, and a coded bit "0" generates an OFF symbol. In other words, after coding and modulation are performed on the data, the ON symbol, the OFF symbol, the OFF symbol, and the ON symbol are sequentially generated. In addition, in a modulation process, an RE corresponding to the ON symbol may carry the second signal sent by the first device to the third device, and an RE corresponding to the OFF symbol may carry the zero-power channel state information reference signal.

Optionally, the second signal or the third signal includes at least one of the following: downlink control information, a physical downlink shared channel, a reference signal, a synchronization signal, and a broadcast signal.

The reference signal may be one or more of the following reference signals in the NR system: a non-zero power channel state information reference signal, a demodulation reference signal (demodulation reference signal, DMRS) of a physical downlink shared channel (physical downlink shared channel, PDSCH), a phase-tracking reference signal (phase-tracking reference signal, PTRS) of the PDSCH, a demodulation reference signal of a physical downlink control channel (physical downlink control channel, PDCCH), a phase-tracking reference signal of the PDCCH, a demodulation reference signal of a physical broadcast channel (physical broadcast channel, PBCH), a remote interference management reference signal (remote interference management reference signal, RIM-RS), and a positioning reference signal (positioning reference signal). For details about the reference signal generation method and mapping manner, refer to descriptions in section 7.4.1 in 3GPP TS 38.211 V16.7.0.

The reference signal may be one or more of the following reference signals in the LTE system: a non-zero power channel state information reference signal, a cell-specific reference signal (cell-specific reference signal, CRS), a multimedia broadcast multicast service single frequency network (multimedia broadcast multicast service single frequency network, MBSFN) reference signal, a user equipment (user equipment, UE) specific reference signal, a demodulation reference signal associated with an enhanced PDCCH (enhanced PDCCH, EPDCCH), machine type communication PDCCH (machine type communication PDCCH, MPDCCH) or a short PDCCH (short PDCCH, SPDCCH), a demodulation reference signal of a PBCH, a positioning reference signal (positioning reference signal), and a machine type communication wake up signal (MTC wake up signal, MWUS). For details about the reference signal generation method and mapping manner, refer to descriptions in section 6.10 and section 6.11B in 3GPP TS36.211 V16.7.0.

The reference signal may be one or more of the following reference signals in an NB-IoT system: a narrowband reference signal (narrowband reference signal, NRS), a narrowband positioning reference signal (narrowband positioning reference signal, NPRS), and a narrowband wake up signal (narrowband wake up signal). For details about the reference signal generation method and mapping manner, refer to descriptions in section 10.2.6, section 10.2.6A, and section 10.2.6B in 3GPP TS 36.211 V16.7.0.

In a possible implementation, the first device sends the second signal to the third device on at least one of the N1 ON symbols. For example, the second signal is downlink control information (downlink control information, DCI). Correspondingly, the third device receives the DCI.

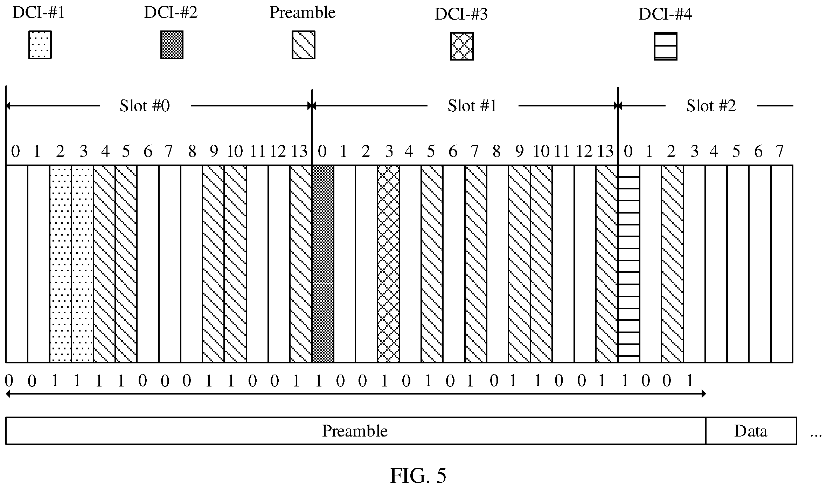

For example, as shown in FIG. 5, it is assumed that a quantity of elements in the preamble sequence included in the first signal is 32, and the preamble sequence corresponds to a binary sequence whose quantity of elements is 32. To be specific, 32 OFDM symbols are required for transmission of the preamble sequence, a bit 1 in the preamble sequence corresponds to an ON symbol, and a bit 0 in the preamble sequence corresponds to an OFF symbol. In this example, 16 ON symbols and 16 OFF symbols are required for transmission of the preamble sequence. The first device may transmit the DCI by using the ON symbol in the 16 ON symbols. For example, the first device transmits the DCI to a plurality of third devices by using five ON symbols. The DCI transmitted by using the five ON symbols may be sent to different third devices. As shown in FIG. 5, the plurality of third devices include a terminal device 1#, a terminal device 2#, a terminal device 3#, and a terminal device 4#. The five ON symbols include a symbol 2, a symbol 3 (used to transmit DCI of the terminal device 1#) in a slot 0#, a symbol 0 (used to transmit DCI of the terminal device 2#), a symbol 3 (used to transmit DCI of the terminal device 3#) in a slot 1#, and a symbol 0 (used to transmit DCI of the terminal device 4#) in a slot 2#. It should be understood that quantities of bits 0 (corresponding to the OFF symbol) and bits 1 (corresponding to the ON symbol) in the binary sequence corresponding to the preamble sequence may be the same or may be different. FIG. 5 is merely an example. This is not limited in this application.

It should be understood that formats of the DCI transmitted on the five ON symbols may be all DCI formats supported by the NR, for example, a DCI format 0_0, a DCI format 1_0, a DCI format 0_1, a DCI format 1_1, a DCI format 2_0, a DCI format 2_1, a DCI format 2_2, a DCI format 2_3, a DCI format 2_4, a DCI format 2_5, a DCI format 2_6, a DCI format 3_0, a DCI format 3_1, or the like. Functions of the foregoing DCI formats are shown in Table 1. For information carried in the foregoing DCI formats and a corresponding quantity of bits, refer to section 7.3.1 in 3GPP TS 38.212 V16.7.0.

**Table 1**

| DCI format | Function |
|---|---|
| 0_0 | Schedule a PUSCH in a cell |
| 1_0 | Schedule one or more PUSCHs in a cell, or for a configured grant (configured grant) PUSCH, indicate downlink feedback information (downlink feedback information) |
| 0_2 | Schedule a PUSCH in a cell |
| 1_0 | Schedule a PDSCH in a cell |
| 1_1 | Schedule a PDSCH in a cell, and/or trigger a one shot (one shot) hybrid automatic repeat request acknowledgment (hybrid automatic repeat request acknowledge, HARQ-ACK) codebook feedback |
| 1_2 | Schedule a PDSCH in a cell |
| 2_0 | Inform a group of UE slot formats, an available resource block (resource block, RB) set, channel occupancy time (channel occupancy time, COT) duration, and search space set switching |
| 2_1 | Inform a group of UE physical resource blocks (physical resource blocks, PRB(s)) and OFDM symbol(s) that the UE may assume that there is no transmission for the |
| | UE on these PRB(s) and OFDM symbol(s) |
| 2_2 | Transmit a transmit power control (transmit power control, TPC) command for a PUCCH and a PUSCH |
| 2_3 | Inform TPC commands transmitted by using a group of UE channel sounding reference signals (sounding reference signals, SRSs), and the SRS is transmitted by using one or more UE |
| 2_4 | Inform a group of UE PRB(s) and OFDM symbol(s) on which the UE cancels corresponding uplink transmission from the UE |
| 2_5 | Inform availability (availability) of soft resources (soft resources) defined in section 9.3.1 of 3GPP TS 38.473 V16.7.0 |
| 2_6 | Inform one or more UE of energy saving information beyond discontinuous reception (discontinuous reception, DRX) activity time |
| 3_0 | Schedule an NR sidelink in a cell |
| 3_1 | Schedule an LTE sidelink in a cell |

It should be understood that the formats of the DCI transmitted on the five ON symbols may be all DCI formats supported by the LTE. For a corresponding DCI format name, information carried in the DCI format, and a corresponding quantity of bits, refer to section 5.3.3.1 in 3GPP TS 36.212 V16.6.0. The formats of the DCI transmitted on the five ON symbols may be all DCI formats supported by the NB-IoT. For a corresponding DCI format name, information carried in the DCI format, and a corresponding quantity of bits in the DCI format, refer to section 6.4.3 in 3GPP TS 36.212 V16.6.0.

In the NR system, the LTE system, or the NB-IoT system, uplink data and/or downlink data scheduled by using the DCI may occupy a plurality of consecutive OFDM symbols. As described above, a modulation scheme of the first signal is usually OOK modulation. To obtain a boundary of an ON symbol or an OFF symbol through OOK modulation, consecutive ON symbols or consecutive OFF symbols need to be avoided as far as possible for the first signal.

To avoid impact caused, when data scheduled by using the DCI occupies consecutive OFDM symbols, on the boundary that is of the ON symbol or the OFF symbol in the first signal and that is obtained by the second device, preferably, the DCI is DCI that is not used to schedule data. For example, for the NR system, the DCI format is one of the DCI format 1_0, the DCI format 2_0, the DCI format 2_1, the DCI format 2_2, the DCI format 2_3, the DCI format 2_4, the DCI format 2_5, or the DCI format 2_6. For the LTE system, the DCI format is one of a DCI format 1A, a DCI format 1C, a DCI format 3, a DCI format 3A, a DCI format 3B, a DCI format 6-1A, a DCI format 6-1B, or a DCI format 6-2. For the NB-IoT system, the DCI format is one of a DCI format N1 or a DCI format N2.

It should be further understood that, in the foregoing figure, the quantity of elements in the preamble sequence of the first signal, the quantity of ON symbols, the quantity of OFF symbols, and arrangement are merely examples, and are not limited in this application. Similar examples in the following are the same, and details are not described again.

In a possible implementation, the N OFDM symbols include at least four consecutive first symbols (for example, ON symbols).

Optionally, the first device sends the second signal to the third device on the four consecutive first symbols. For example, the second signal is a synchronization signal and/or a broadcast signal. Correspondingly, the third device receives the second signal.

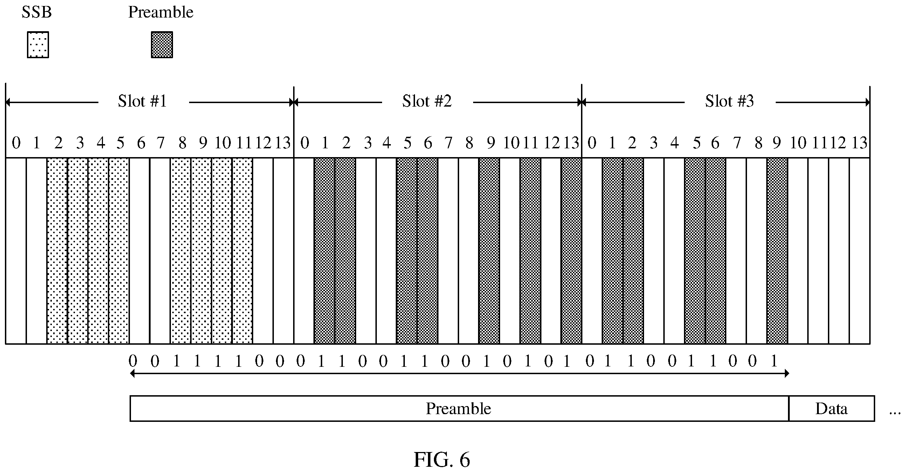

For example, as shown in FIG. 6, it is assumed that a quantity of elements in a preamble sequence of a first signal is 32. To be specific, transmission of the preamble sequence needs to occupy 32 OFDM symbols, a bit 1 corresponds to an ON symbol, and a bit 0 corresponds to an OFF symbol. In this case, 16 ON symbols and 16 OFF symbols are required for transmission of the preamble.

As shown in FIG. 6, four ON symbols in the 16 ON symbols are used to transmit a synchronization signal and a physical broadcast channel block (synchronization signal and physical broadcast channel block, SSB). The SSB includes a primary synchronization signal (primary synchronization signal, PSS), a secondary synchronization signal (secondary synchronization signal, SSS), and a physical broadcast channel (physical broadcast channel, PBCH). The third device may obtain timing information, frequency offset information, a cell identity, and the like by using the PSS and the SSS, may obtain a radio frame number through the PBCH, may be aligned with an air interface, and may further obtain related information for scheduling a system information block 1 (system information block 1, SIB 1).

One SSB in an NR system occupies four consecutive OFDM symbols, and one SSB herein is an SSB in a beam direction. Therefore, a binary bit sequence corresponding to the first signal includes at least one " 1 1 1 1". As shown in FIG. 6, a preamble sequence of the first signal includes at least one "1 1 1 1" or at least one "0 0 1 1 1 1", or a bit sequence corresponding to a preamble of the first signal starts with "1 1 1 1", or starts with 0 0 1 1 1 1. The first device may send the SSB to the third device on an OFDM symbol corresponding to "1 1 1 1". It should be understood that 0 herein represents the bit 0, and 1 herein represents the bit 1.

For a cell defining SSB (cell defining SSB, CD-SSB), the SSB includes the SIB 1, and scheduling of the SIB 1 may be performed after the SSB. Downlink data carrying the SIB 1 may occupy a plurality of consecutive OFDM symbols. As described above, a modulation scheme of the first signal is usually OOK modulation. To obtain a boundary of an ON symbol or an OFF symbol through OOK modulation, consecutive ON symbols or consecutive OFF symbols need to be avoided as far as possible for the first signal. To avoid impact caused, when the SIB 1 occupies consecutive OFDM symbols, on the boundary that is of the ON symbol or the OFF symbol in the first signal and that is obtained by a second device, preferably, the SSB is a non cell defined SSB (non cell defined SSB, non CD-SSB), that is, the SSB does not include the SIB 1.

In a possible implementation, a quantity of OFDM symbols occupied by the preamble sequence of the first signal is an integer multiple of a quantity of OFDM symbols in one slot. It may also be expressed as that a quantity of elements in the preamble sequence of the first signal is an integer multiple of a quantity of OFDM symbols in one slot.

Optionally, the first device sends a second signal to the third device on at least one of N1 ON symbols. For example, the second signal is a physical downlink shared channel (physical downlink shared channel, PDSCH). Correspondingly, the third device receives the second signal on the at least one of the N1 ON symbols.

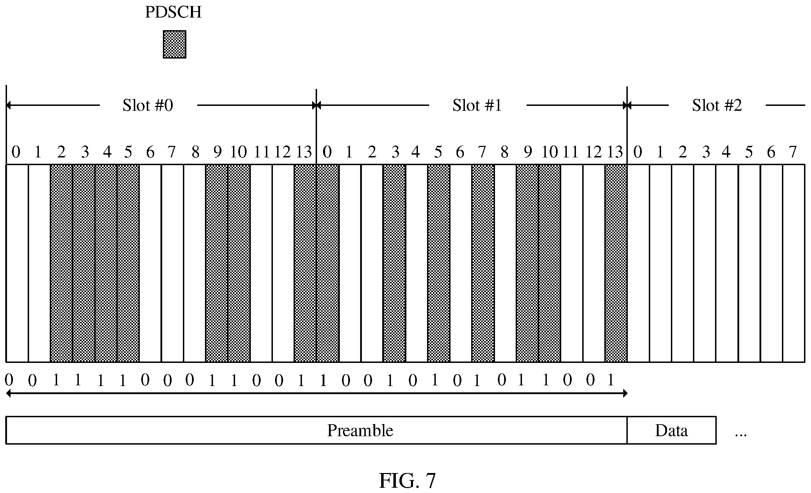

For example, as shown in FIG. 7, in an NR system, when a cyclic prefix of an OFDM symbol is a normal prefix, a quantity of OFDM symbols in one slot is 14. During PDSCH transmission, the first device may send configuration information to a third device, and the configuration information is used by the third device to determine a resource that cannot be used for PDSCH transmission. In the NR system, as described above, the configuration information corresponds to one or more rate match patterns. Each rate match pattern is configured in a unit of one or two slots in time domain. Therefore, to match the rate match pattern, a quantity of elements in a preamble sequence of a first signal may be set to a multiple of 14 or 28. For example, the quantity of elements in the preamble sequence of the first signal is 28, that is, 28 OFDM symbols are required for transmission of the preamble sequence of the first signal, a bit 1 corresponds to an ON symbol, and a bit 0 corresponds to an OFF symbol. For example, 14 ON symbols and 14 OFF symbols are required for transmission of the preamble sequence.

The 14 ON symbols are used to transmit a PDSCH, and locations at which a bit T 1' and a bit '0' appear in the 28 OFDM symbols correspond to a bitmap corresponding to the rate match pattern (rate match pattern), that is, the locations at which the bit '1' and the bit '0' appear in the 28 OFDM symbols correspond to symbolsInResourceBlock in the rate match pattern. symbolsInResourceBlock is used to indicate which OFDM symbols can be used to transmit the PDSCH and which OFDM symbols cannot be used to transmit the PDSCH in one or more slots during PDSCH transmission. Therefore, to ensure that the preamble sequence of the first signal corresponds to the bitmap corresponding to the rate match pattern, the quantity of elements in the preamble sequence of the first signal needs to be an integer multiple of 14.

Optionally, the method 200 further includes the following step.

Step S220: Before the first device sends the first signal to the second device on the N OFDM symbols, the first device sends deactivation information to the third device, where the deactivation information is used to deactivate a first resource. Correspondingly, the third device deactivates the first resource after receiving the deactivation information.

A prerequisite for the method 200 to include step S220 is that before the first device sends the first signal to the second device on the N OFDM symbols, the first device sends semi-static configuration signaling to the third device, a first resource configured by using the semi-static configuration signaling is activated, and the first resource includes the N OFDM symbols.

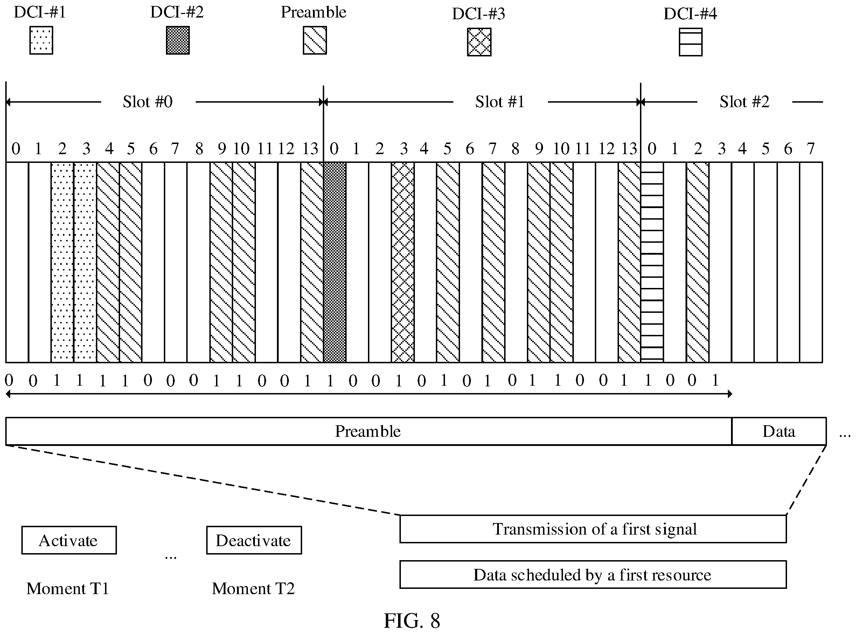

For example, as shown in FIG. 8, before the first signal is transmitted, the first device configures semi-static configuration signaling for the third device. The semi-static configuration signaling may be a semi-static PDSCH or a semi-static reference signal. In addition, a first resource (for example, a periodic resource) configured by using the semi-static configuration signaling is activated (for example, activated at a moment T1), and the first resource overlaps with the N OFDM symbols.

To avoid that the third device mistakenly considers the first signal as information scheduled by the first resource configured by using the semi-static configuration signaling, and that reception performance of the third device is affected, a network device needs to deactivate the first resource configured by using the semi-static configuration signaling (for example, deactivate the first resource at a moment T2) before the first signal is transmitted.

By performing step S220, the third device can be prevented from mistakenly considering the first signal as the information scheduled by the first resource configured by using the semi-static configuration signaling to affect the reception performance of the third device.

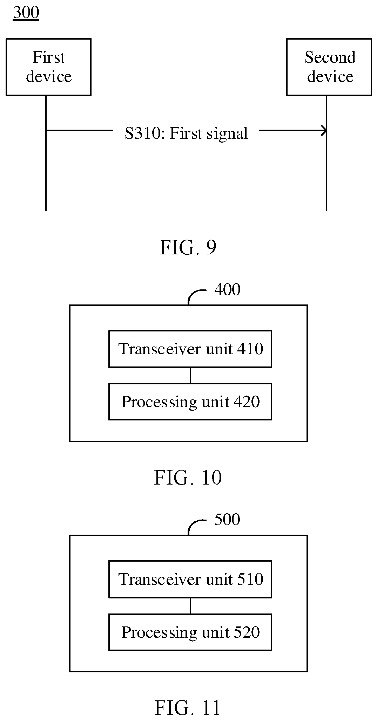

As shown in FIG. 9, this application further provides a signal sending method 300. The method 300 includes the following step.

Step S310: A first device sends a first signal to a second device, where the first signal is carried on N OFDM symbols, the N OFDM symbols include N1 first symbols, N is an integer greater than or equal to 1, and N1 < N. Correspondingly, the second device receives the first signal.

For example, the first signal may be modulated through MC-OOK based on a CP-OFDM waveform. Specifically, the first signal may be carried by using an OFDM symbol whose time length is 2 µs or 4 µs. For example, when the first signal includes data, it is assumed that an information bit of the data is "10", and a coded bit is "1001". After MC-OOK or OOK modulation is performed, a coded bit " 1" generates an ON symbol, and a coded bit "0" generates an OFF symbol. In other words, after coding and modulation are performed on the data, the ON symbol, the OFF symbol, the OFF symbol, and the ON symbol are sequentially generated.

The first signal may be a preamble sequence and/or data. A function of the preamble sequence may include at least one of the following: automatic gain control (automatic gain control, AGC), time synchronization, frequency synchronization, data packet detection, boundary detection, and rate indication. The AGC is used to reduce distortion by adjusting strength of a received signal. The time synchronization is used to reduce an error of a non-coherent interval by obtaining correct timing or sampling timing. The boundary detection is used to detect a boundary of the preamble sequence and/or control information. The rate indication is used to indicate different data transmission rates. The preamble sequence is located before the data. A time domain resource used to transmit the preamble sequence and a time domain resource used to transmit the data may be consecutive or inconsecutive. The data herein refers to data corresponding to the preamble sequence.

Each element in a binary sequence corresponding to the first signal corresponds to one of the N OFDM symbols. Alternatively, each element in a coded bit sequence corresponding to the first signal corresponds to one of the N OFDM symbols. For the first signal, one element of the binary sequence may be mapped to one OFDM symbol, or one element of the coded sequence may be mapped to one OFDM symbol. The binary sequence is a sequence including a binary number 0 (or referred to as a bit 0) and/or a binary number 1 (or referred to as a bit 1). The coded bit sequence is a sequence including a binary number 0 (or referred to as a bit 0) and/or a binary number 1 (or referred to as a bit 1). It should be understood that one binary number in the sequence is one element. For example, "0" or " 1" is one element in the sequence. For example, the foregoing binary sequence or the foregoing coded bit sequence may be represented in a mathematical form as {a₀, a₁, a₂, ..., aₙ₋₁}, aᵢ is an element of the sequence, aᵢ is a binary number, where i = 0, 1, 2, ..., n-1. A quantity of elements included in the sequence is n. It should be noted that when the first signal includes the preamble sequence, the binary sequence corresponding to the preamble sequence does not need to be coded. When the first signal includes data, an information bit corresponding to the data needs to be coded.

Optionally, the N OFDM symbols used for transmitting the first signal have a same antenna port.

Optionally, cyclic prefixes and/or subcarrier spacings of the N OFDM symbols used for transmitting the first signal are the same.

Optionally, the N OFDM symbols used for transmitting the first signal are located in K time units, all OFDM symbols used for transmitting the first signal in a first time unit have a same antenna port, and the first time unit is one or more of the K time units. For example, K is 2, and the time units are sequentially numbered from 0 to 1. The first time unit is a time unit 0 or a time unit 1, and all OFDM symbols used for transmitting the first signal in the time unit 0 have a same antenna port. In the time unit 1, all OFDM symbols used for transmitting the first signal have a same antenna port. Antenna ports of the time unit 0 and the time unit 1 may be the same or may be different.

Optionally, a modulation scheme of the first signal is OOK modulation, ASK modulation, or FSK modulation.

Optionally, a coding mode of the first signal is manchester (manchester) code, miller (miller) code, FM0 (namely, bi-phase space) code, or PIE (pulse interval encoding, pulse width encoding) code.

Optionally, the N OFDM symbols further include N2 second symbols, and N2 + N1 = N.

Optionally, the N1 first symbols have same power. Alternatively, it may be expressed as that energy of the N1 first symbols is the same. It may also be expressed as that EPRE of the N1 first symbols is the same.

Optionally, a power difference between any two of the N1 first symbols is close, or an absolute value of a power difference between any two of the N1 first symbols is less than a first threshold. The first threshold is less than or equal to an average value of the power of the N1 first symbols. Alternatively, it may be expressed as that an energy difference between any two of the N1 first symbols is close, or an absolute value of an energy difference between any two of the N1 first symbols is less than a second threshold. The second threshold is less than or equal to an average value of the energy of the N1 first symbols. Alternatively, it may be expressed as that an energy difference between any two of the N1 first symbols is close, or an absolute value of an EPRE difference between each two of the N1 first symbols is less than a third threshold. The third threshold is less than or equal to an average value of the EPRE of the N1 first symbols.

Optionally, the first signal includes a downlink signal of a passive internet of things, or a WUR wake up signal.

Optionally, the first symbol is an ON symbol corresponding to on-off keying modulation or multi-carrier on-off keying modulation, and a second symbol is an OFF symbol corresponding to on-off keying modulation or multi-carrier on-off keying modulation.

Optionally, a difference between the first symbol and the second symbol includes at least one of the following:
data/signaling is transmitted on the first symbol, and no data/signaling is transmitted on the second symbol;
the first symbol is an OFDM symbol having energy transmission, and the second symbol is an OFDM symbol having no energy transmission; and
on the first symbol, the first device may detect that energy is higher than a threshold, and on the second symbol, the first device does not detect that energy is higher than a threshold.

Energy of the first symbol is higher than energy of the second symbol.

According to the foregoing solution, a technology similar to RFID and WUR may be introduced to an LTE or NR system, and an RE corresponding to an OFDM symbol used to transmit the first signal may carry information. Therefore, according to the method 300, REs corresponding to ON symbols of N OFDM symbols may carry some information sent by the first device to a third device. In this way, the first device can send both the first signal to the second device and a second signal to the third device on a same OFDM symbol, and this improves spectral efficiency. The information sent by the first device to the third device may be, for example, one or more of downlink control information, a physical downlink shared channel, a reference signal, a synchronization signal, and a broadcast signal.

Optionally, the N OFDM symbols include four consecutive first symbols (for example, ON symbols). A binary bit sequence corresponding to the first signal includes at least one "1 1 1 1". As shown in FIG. 6, a preamble sequence of the first signal includes at least one " 1 1 1 1" or at least one "0 0 1 1 1 1", or a bit sequence corresponding to a preamble of the first signal starts with "1 1 1 1", or starts with 0 0 1 1 1 1. The first device may send the first signal (for example, an SSB) to the third device on an OFDM symbol corresponding to "1 1 1 1". It should be understood that 0 herein represents the bit 0, and 1 herein represents the bit 1.

According to the foregoing solution, the first device may carry SSBs on REs corresponding to the ON symbols of the N OFDM symbols, to reduce network resource overheads.

Optionally, a quantity of OFDM symbols occupied by the preamble sequence of the first signal is an integer multiple of a quantity of OFDM symbols in one slot. It may also be expressed as that a quantity of elements in the preamble sequence of the first signal is an integer multiple of a quantity of OFDM symbols in one slot.

According to the foregoing solution, the first device may carry the first signal (for example, a PDSCH) to subcarriers corresponding to the ON symbols of the N OFDM symbols, to reduce network resource overheads. It should be understood that the steps shown in dashed lines in the foregoing flowchart FIG. 4 or FIG. 9 are optional steps, and a sequence of the steps is determined according to internal logic of the method. Sequence numbers shown in FIG. 4 or FIG. 9 are merely examples, and do not limit a sequence of the steps in this application.

It should be understood that when the first device schedules another downlink transmission (for example, downlink transmission other than that shown in FIG. 4 or FIG. 9), a pattern in which an ON symbol and an OFF symbol appear in an OFDM symbol corresponding to the downlink transmission should avoid being the same as a pattern in which an ON symbol and an OFF symbol appear during first signal transmission. The pattern is a quantity and an arrangement order of the ON symbol and the OFF symbol.

It should be further understood that the methods provided in embodiments of this application may be used independently, or may be used together. This is not limited in this application.

It should be noted that the execution body shown in FIG. 4 or FIG. 9 is merely an example, and the execution body may alternatively be a chip, a chip system, or a processor that supports the execution body in implementing the methods shown in FIG. 4 or FIG. 9. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, methods and operations implemented by the first device may further be implemented by a component (for example, a chip or a circuit) that may be used in the first device, and methods and operations implemented by the second device may further be implemented by a component (for example, a chip or a circuit) that may be used in the second device.

The foregoing mainly describes the solutions provided in embodiments of this application from a perspective of interaction between network elements. It may be understood that, to implement the foregoing functions, each network element such as a transmit device or a receive device includes a corresponding hardware structure and/or software module for performing each function. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 10 is a schematic block diagram of a communication apparatus according to an embodiment of this application. The communication apparatus 400 includes a transceiver unit 410 and a processing unit 420. The transceiver unit 410 may communicate with the outside, and the processing unit 420 is configured to perform data processing. The transceiver unit 410 may also be referred to as a communication interface or a communication unit.

Optionally, the communication apparatus 400 may further include a storage unit. The storage unit may be configured to store instructions and/or data. The processing unit 420 may read the instructions and/or the data in the storage unit.

In a design, the communication apparatus 400 may be a first device, the transceiver unit 410 is configured to perform a receiving or sending operation of the first device in the foregoing method embodiment, and the processing unit 420 is configured to perform an internal processing operation of the first device in the foregoing method embodiment.

In another design, the communication apparatus 400 may be a device including a first device. Alternatively, the communication apparatus 400 may be a component configured in a first device, for example, a chip in the first device. In this case, the transceiver unit 410 may be an interface circuit, a pin, or the like. Specifically, the interface circuit may include an input circuit and an output circuit, and the processing unit 420 may include a processing circuit.

In a possible implementation, the transceiver unit 410 is configured to send a first signal to a second device on N orthogonal frequency division multiplexing OFDM symbols, where the N OFDM symbols include N1 first symbols, N is an integer greater than or equal to 1, and N1 < N. The transceiver unit 410 is further configured to send a second signal to a third device on at least one of the N1 first symbols.

Based on the foregoing solution, the first device can generate, by using a downlink signal in an existing communication system, the first signal to be sent to the second device, and can use a resource element RE corresponding to a first symbol carrying the first signal to carry the second signal to be sent to the third device (whose capability is different from that of the second device). Therefore, a technology similar to RFID and WUR can be introduced to the existing communication system, and network resource overheads can be reduced.

In a possible implementation, the N OFDM symbols further include N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 = N.

In a possible implementation, the N1 first symbols have same power.

In a possible implementation, the first symbol is an ON symbol corresponding to on-off keying modulation or multi-carrier on-off keying modulation.

In a possible implementation, the second symbol is an OFF symbol corresponding to on-off keying modulation or multi-carrier on-off keying modulation.

In a possible implementation, the N OFDM symbols include at least four consecutive first symbols.

In a possible implementation, the four consecutive first symbols carry a synchronization signal and/or a broadcast signal.

In a possible implementation, a quantity of OFDM symbols occupied by a preamble sequence of the first signal is an integer multiple of a quantity of OFDM symbols in one slot.

In a possible implementation, the second signal includes at least one of the following: downlink control information, a physical downlink shared channel, a reference signal, a synchronization signal, and a broadcast signal.

In a possible implementation, when the second signal includes the downlink control information, the downlink control information is downlink control information that is not used to schedule data.

In a possible implementation, before sending the first signal to the second device on the N OFDM symbols, the transceiver unit 410 sends semi-static configuration signaling to the third device, a first resource configured by using the semi-static configuration signaling is activated, and the first resource includes the N OFDM symbols. Before sending the first signal to the second device on the N OFDM symbols, the transceiver unit 410 is further configured to send deactivation information to the third device, where the deactivation information is used to deactivate the first resource.

FIG. 11 is a schematic block diagram of a communication apparatus according to an embodiment of this application. The communication apparatus 500 includes a transceiver unit 510 and a processing unit 520. The transceiver unit 510 may communicate with the outside, and the processing unit 520 is configured to perform data processing. The transceiver unit 510 may also be referred to as a communication interface or a communication unit.

Optionally, the communication apparatus 500 may further include a storage unit. The storage unit may be configured to store instructions and/or data. The processing unit 520 may read the instructions and/or the data in the storage unit.

In a design, the communication apparatus 500 may be a second device, the transceiver unit 510 is configured to perform a receiving or sending operation of the second device in the foregoing method embodiment, and the processing unit 520 is configured to perform an internal processing operation of the second device in the foregoing method embodiment.

In another design, the communication apparatus 500 may be a device including a second device. Alternatively, the communication apparatus 500 may be a component configured in a second device, for example, a chip in the second device. In this case, the transceiver unit 510 may be an interface circuit, a pin, or the like. Specifically, the interface circuit may include an input circuit and an output circuit, and the processing unit 520 may include a processing circuit.

In a possible implementation, the transceiver unit 510 is configured to receive a first signal from a first device on N orthogonal frequency division multiplexing OFDM symbols, where the N OFDM symbols include N1 first symbols, at least one of the N1 first symbols carries a second signal sent by the first device to a third device, N is an integer greater than or equal to 1, and N1 < N.

In a possible implementation, the transceiver unit 510 is configured to receive a first signal from a first device on N orthogonal frequency division multiplexing OFDM symbols, where the N OFDM symbols include N1 first symbols, N is an integer greater than or equal to 1, and N1 < N.

Based on the foregoing solution, the first signal received by the second device may be generated based on a downlink signal in an existing communication system, and a resource element RE corresponding to a first symbol of the first signal may alternatively carry the second signal to be sent to the third device (whose capability is different from that of the second device). Therefore, a technology similar to RFID and WUR can be introduced to the existing communication system, and network resource overheads can be reduced.

In a possible implementation, the N OFDM symbols further include N2 second symbols, and at least one OFDM symbol of the N2 second symbols carries a zero-power channel state information reference signal configured by the first device for the third device, or at least one of the N2 second symbols is configured by the first device as a resource that is not used to transmit a downlink signal corresponding to the third device, where N2 + N1 = N.

In a possible implementation, the N1 first symbols have same power.

In a possible implementation, the first symbol is an ON symbol corresponding to on-off keying modulation or multi-carrier on-off keying modulation.

In a possible implementation, the second symbol is an OFF symbol corresponding to on-off keying modulation or multi-carrier on-off keying modulation.

In a possible implementation, the N OFDM symbols include at least four consecutive first symbols.

In a possible implementation, the four consecutive first symbols carry a synchronization signal and/or a broadcast signal. With reference to the second aspect, in some implementations of the second aspect, a quantity of OFDM symbols occupied by a preamble sequence of the first signal is an integer multiple of a quantity of OFDM symbols in one slot.

In a possible implementation, the second signal includes at least one of the following: downlink control information, a physical downlink shared channel, a reference signal, a synchronization signal, and a broadcast signal.

In a possible implementation, when the second signal includes the downlink control information, the downlink control information is downlink control information that is not used to schedule data.

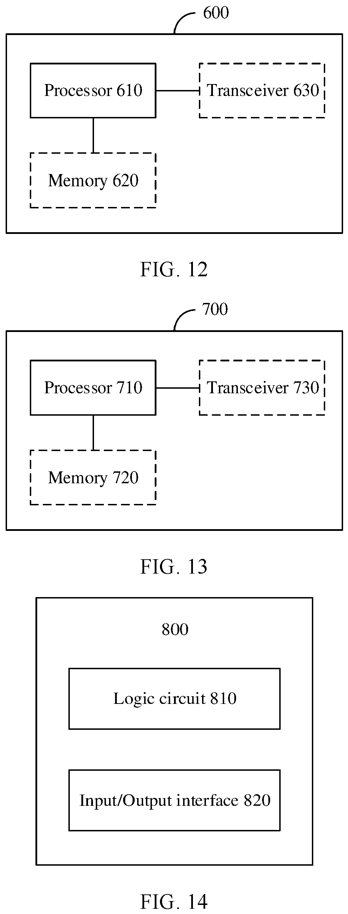

As shown in FIG. 12, an embodiment of this application further provides a communication apparatus 600. The communication apparatus 600 includes a processor 610. The processor 610 is coupled to a memory 620. The memory 620 is configured to store a computer program or instructions and/or data. The processor 610 is configured to execute the computer program or the instructions and/or the data stored in the memory 620, so that the methods in the foregoing method embodiments are performed.

Optionally, the communication apparatus 600 includes one or more processors 610.

Optionally, as shown in FIG. 12, the communication apparatus 600 may further include a memory 620.

Optionally, the communication apparatus 600 may include one or more memories 620.

Optionally, the memory 620 and the processor 610 may be integrated, or separately disposed.

Optionally, as shown in FIG. 12, the communication apparatus 600 may further include a transceiver 630 and/or a communication interface. The transceiver 630 and/or the communication interface are/is configured to receive and/or send a signal. For example, the processor 610 is configured to control the transceiver 630 and/or the communication interface to receive and/or send the signal.

In a solution, the communication apparatus 600 is configured to perform the operations performed by the first device in the foregoing method embodiments. For example, the processor 610 is configured to implement an operation performed internally by the first device in the foregoing method embodiments, and the transceiver 630 is configured to implement a receiving or sending operation performed by the first device in the foregoing method embodiments. The processing unit 420 in the apparatus 400 may be the processor in FIG. 12, and the transceiver unit 410 may be the transceiver in FIG. 12. For specific operations performed by the processor 610, refer to the foregoing descriptions of the processing unit 420. For operations performed by the transceiver 630, refer to the descriptions of the transceiver unit 410. Details are not described herein again.

As shown in FIG. 13, an embodiment of this application further provides a communication apparatus 700. The communication apparatus 700 includes a processor 710. The processor 710 is coupled to a memory 720. The memory 720 is configured to store a computer program or instructions and/or data. The processor 710 is configured to execute the computer program or the instructions and/or the data stored in the memory 720, so that the methods in the foregoing method embodiments are performed.

Optionally, the communication apparatus 700 includes one or more processors 710.

Optionally, as shown in FIG. 13, the communication apparatus 700 may further include a memory 720.

Optionally, the communication apparatus 700 may include one or more memories 720.

Optionally, the memory 720 and the processor 710 may be integrated, or separately disposed.

Optionally, as shown in FIG. 13, the communication apparatus 700 may further include a transceiver 730 and/or a communication interface. The transceiver 730 and/or the communication interface are/is configured to receive and/or send a signal. For example, the processor 710 is configured to control the transceiver 730 to receive and/or send a signal.

In a solution, the communication apparatus 700 is configured to perform the operations performed by the second device in the foregoing method embodiments.

For example, the processor 710 is configured to implement an operation performed internally by the second device in the foregoing method embodiments, and the transceiver 730 is configured to implement a receiving or sending operation performed by the second device in the foregoing method embodiments. The processing unit 520 in the apparatus 500 may be the processor in FIG. 13, and the transceiver unit 510 may be the transceiver and/or the communication interface in FIG. 13. For specific operations performed by the processor 710, refer to the foregoing descriptions of the processing unit 520. For operations performed by the transceiver 730, refer to the descriptions of the transceiver unit 510. Details are not described herein again.

An embodiment of this application further provides a communication apparatus, including a processor. The processor is coupled to an input/output interface, and data is transmitted through the input/output interface. The processor is configured to perform the method in any one of the foregoing method embodiments.

As shown in FIG. 14, an embodiment of this application further provides a communication apparatus 800. The communication apparatus 800 includes a logic circuit 810 and an input/output interface (input/output interface) 820.

The logic circuit 810 may be a processing circuit in the communication apparatus 800. The logic circuit 810 may be coupled to a storage unit, and invoke instructions in the storage unit, so that the communication apparatus 800 can implement the methods and functions in embodiments of this application. The input/output interface 820 may be an input/output circuit in the communication apparatus 800, and outputs information processed by the communication apparatus 800, or inputs to-be-processed data or signaling information into the communication apparatus 800 for processing.

In a solution, the communication apparatus 800 is configured to perform the operations performed by the first device in the foregoing method embodiments.

For example, the logic circuit 810 is configured to implement a processing-related operation performed by the first device in the foregoing method embodiment, for example, a processing-related operation performed by the first device in the embodiment shown in FIG. 4 or FIG. 9. The input/output interface 820 is configured to implement a sending-and/or receiving-related operation performed by the first device in the foregoing method embodiment, for example, a sending-and/or receiving-related operation performed by the first device in the embodiment shown in FIG. 4 or FIG. 9. For specific operations performed by the logic circuit 810, refer to the foregoing descriptions of the processing unit 420. For operations performed by the input/output interface 820, refer to the descriptions of the transceiver unit 410. Details are not described herein again.

In another solution, the communication apparatus 800 is configured to perform the operations performed by the second device in the foregoing method embodiments.

For example, the logic circuit 810 is configured to implement a processing-related operation performed by the second device in the foregoing method embodiment, for example, a processing-related operation performed by the second device in the embodiment shown in FIG. 4 or FIG. 9. The input/output interface 820 is configured to implement a sending-and/or receiving-related operation performed by the second device in the foregoing method embodiment, for example, a sending-and/or receiving-related operation performed by the second device in the embodiment shown in FIG. 4 or FIG. 9. For specific operations performed by the logic circuit 810, refer to the foregoing descriptions of the processing unit 520. For operations performed by the input/output interface 820, refer to the descriptions of the transceiver unit 510. Details are not described herein again.

It should be understood that the communication apparatus may be one or more chips. For example, the communication apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

An embodiment of this application further provides a communication system. The communication system includes a first device and a second device. Optionally, the communication system further includes a third device.

According to the method provided in embodiments of this application, this application further provides a computer-readable medium. The computer-readable medium stores program code. When the program code is run on a computer, the computer is enabled to perform the method in the embodiment shown in FIG. 4 or FIG. 9. For example, when the computer program is executed by a computer, the computer is enabled to implement the method performed by the first device or the method performed by the second device in the foregoing method embodiments.

An embodiment of this application further provides a computer program product including instructions. When the instructions are executed by a computer, the computer implements the method performed by the first device or the method performed by the second device in the foregoing method embodiments.

For explanations and beneficial effects of related content in any communication apparatus provided above, refer to the foregoing corresponding method embodiments. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium. (for example, a high-density digital video disc (digital video disc, DVD)), or a semiconductor medium (for example, a solid state disk (solid state disc, SSD)), or the like.

The network device and the terminal device in the foregoing apparatus embodiments correspond to the network device and the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a specific function of the unit, refer to the corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A signal sending method, comprising:
sending, by a first device, a first signal to a second device on N orthogonal frequency division multiplexing OFDM symbols, wherein the N OFDM symbols comprise N1 first symbols, N is an integer greater than or equal to 1, and N1 < N; and
sending, by the first device, a second signal to a third device on at least one of the N1 first symbols.

2. The method according to claim 1, wherein the N OFDM symbols further comprise N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, wherein N2 + N1 = N.

3. The method according to claim 1 or 2, wherein the N1 first symbols have same power.

4. The method according to any one of claims 1 to 3, wherein the first symbol is an ON symbol corresponding to on-off keying modulation or multi-carrier on-off keying modulation.

5. The method according to any one of claims 2 to 4, wherein the second symbol is an OFF symbol corresponding to on-off keying modulation or multi-carrier on-off keying modulation.

6. The method according to any one of claims 1 to 5, wherein the N OFDM symbols comprise at least four consecutive first symbols.

7. The method according to claim 6, wherein the four consecutive first symbols carry a synchronization signal and/or a broadcast signal.

8. The method according to any one of claims 1 to 5, wherein a quantity of OFDM symbols occupied by a preamble sequence of the first signal is an integer multiple of a quantity of OFDM symbols in one slot.

9. The method according to any one of claims 1 to 5, wherein the second signal comprises at least one of the following:
downlink control information;
a physical downlink shared channel;
a reference signal;
a synchronization signal; and
a broadcast signal.

10. The method according to claim 9, wherein when the second signal comprises the downlink control information, the downlink control information is downlink control information that is not used to schedule data.

11. The method according to any one of claims 1 to 10, wherein before the first device sends the first signal to the second device on the N OFDM symbols, the first device sends semi-static configuration signaling to the third device, a first resource configured by using the semi-static configuration signaling is activated, and the first resource comprises the N OFDM symbols; and the method further comprises:
before the first device sends the first signal to the second device on the N OFDM symbols, sending, by the first device, deactivation information to the third device, wherein the deactivation information is used to deactivate the first resource.

12. A signal sending method, comprising:
receiving, by a second device, a first signal from a first device on N orthogonal frequency division multiplexing OFDM symbols, wherein the N OFDM symbols comprise N1 first symbols, at least one of the N1 first symbols carries a second signal sent by the first device to a third device, N is an integer greater than or equal to 1, and N1 < N.

13. The method according to claim 12, wherein the N OFDM symbols further comprise N2 second symbols, and at least one of the N2 second symbols carries a zero-power channel state information reference signal configured by the first device for the third device, or at least one of the N2 second symbols is configured by the first device as a resource that is not used to transmit a downlink signal corresponding to the third device, wherein N2 + N1 = N.

14. The method according to claim 12 or 13, wherein the N1 first symbols have same power.

15. The method according to any one of claims 12 to 14, wherein the first symbol is an ON symbol corresponding to on-off keying modulation or multi-carrier on-off keying modulation.

16. The method according to any one of claims 13 to 15, wherein the second symbol is an OFF symbol corresponding to on-off keying modulation or multi-carrier on-off keying modulation.

17. The method according to any one of claims 12 to 16, wherein the N OFDM symbols comprise at least four consecutive first symbols.

18. The method according to claim 17, wherein the four consecutive first symbols carry a synchronization signal and/or a broadcast signal.

19. The method according to any one of claims 12 to 16, wherein a quantity of OFDM symbols occupied by a preamble sequence of the first signal is an integer multiple of a quantity of OFDM symbols in one slot.

20. The method according to any one of claims 12 to 16, wherein the second signal comprises at least one of the following:
downlink control information;
a physical downlink shared channel;
a reference signal;
a synchronization signal; and
a broadcast signal.

21. The method according to claim 20, wherein when the second signal comprises the downlink control information, the downlink control information is downlink control information that is not used to schedule data.

22. A communication apparatus, comprising:
a unit configured to implement the method according to any one of claims 1 to 11; or
a unit configured to implement the method according to any one of claims 12 to 21.

23. A communication apparatus, wherein the apparatus comprises a processor, the processor is coupled to a memory, the memory stores instructions, and when the instructions are run by the processor,
the processor is enabled to perform the method according to any one of claims 1 to 11; or
the processor is enabled to perform the method according to any one of claims 12 to 21.

24. A communication apparatus, wherein the apparatus comprises a logic circuit, and the logic circuit is configured to be coupled to an input/output interface, and transmit data through the input/output interface, to perform the method according to any one of claims 1 to 11, or perform the method according to any one of claims 12 to 21.

25. A communication system, wherein the communication system comprises a first device and a second device, the first device is configured to perform the method according to any one of claims 1 to 11, and the second device is configured to perform the method according to any one of claims 12 to 21.

26. A computer-readable storage medium, wherein the computer-readable storage medium is configured to store a computer program, and when the computer program is run on a computer, the computer is enabled to perform the method according to any one of claims 1 to 11, or the computer is enabled to perform the method according to any one of claims 12 to 21.

27. A computer program product, wherein the computer program product comprises computer program code, and when the computer program code is run, the method according to any one of claims 1 to 11 is implemented, or the method according to any one of claims 12 to 21 is implemented.
